# EUROPEAN PATENT SPECIFICATION

(11) **EP 4 282 635 B1**
(45) Date of publication and mention of the grant of the patent: **16.10.2024**
(21) Application number: 23185963.8
(22) Date of filing: 16.02.2021
(51) Int. Cl.: B29D 11/00

(54) **ADAPTIVE PROCESS FOR FABRICATING NON-TUNABLE FREEFORM OPTICAL SURFACES AND CORRESPONDING OPTICAL DEVICES AND COMPONENTS**
ADAPTIVES VERFAHREN ZUR HERSTELLUNG VON NICHT ABSTIMMBAREN OPTISCHEN FREIFORMFLÄCHEN UND ENTSPRECHENDEN OPTISCHEN VORRICHTUNGEN UND KOMPONENTEN
PROCÉDÉ ADAPTATIF POUR LA FABRICATION DE SURFACES OPTIQUES DE FORME LIBRE NON ACCORDABLES ET DISPOSITIFS ET COMPOSANTS OPTIQUES CORRESPONDANTS

(43) Date of publication of application: 29.11.2023
(62) Divisional of application: 21157317.5
(73) Proprietor: Albert-Ludwigs-Universität Freiburg, 79098 Freiburg (DE)
(72) Inventor: Weber, Stefan, 4057 Basel (CH); Banerjee, Kaustubh, 73430 Aalen (DE); Ataman, Caglar, 79100 Freiburg (DE); Rajaeipour, Pouya, 79106 Freiburg (DE); Zappe, Hans, 79114 Freiburg (DE)
(74) Representative: Mertzlufft-Paufler, Cornelius

(56) References cited:
- WO-A1-2013/056380
- US-A1- 2005 056 953

## Description

The present disclosure concerns the field of freeform optics (FFO), in particular optical components featuring a freeform optical surface (FFOS), which may be either transmissive or reflective. In particular, the present disclosure concerns a process for fabricating an optical component, such as a freeform phase plate, which features a non-tunable FFOS. This FFOS introduces a constant optical phase-shift ϕ(ρ,θ) and can thus be used as phase plate, for example. The mentioned process can be adapted, in particular, for rapid fabrication of non-replicated first generation and customized FFO-components.

In addition, the present disclosure concerns a specific design and use of a particular actuator that may be used in said fabrication process, optical components and optical assemblies fabricated with the process, and a fabrication setup designed to be employed in said process.

Freeform optics (FFO) refers to optical components such as lenses or mirrors, which have no translational or rotational symmetry about axes normal to the mean plane of the component. FFO may feature continuous and smooth FFOS. Other FFOS exhibit discontinuous steps or facets. FFOs may also have structured or functional surfaces.

FFOs provide novel possibilities for optical designs within a large variety of specifications. One particular asset of FFOs is that they can deliver practically "aberration-free" optical quality with a reduced number of (passive) optical components resulting in compact optical designs. There are thus basically three main incentives for using free-form optics: i) achieving new optical functionality; ii) improving optical performance; and iii) enhancing compactness / reducing the number of optical elements in an optical system.

Due to their complex surface shape, however, FFOs are typically very expensive to produce. Therefore, the state-of-the art approach is to use replication techniques to lower the price of second generation FFOs, which are replicated from a FFO-master (first generation or father) that is expensive (in the order of k€) because it is fabricated by diamond turning or from an expensive material such as high-quality steel. A big disadvantage of this approach is that costs for initial setup, calibration or tooling change are high for the mastering. Therefore, this approach is not suitable for rapidly fabricating large numbers of FFOs with different FFOS, each customized to the needs of a particular customer or application case.

The publications WO 2013 056380 A1 and US 2005 0056953 A1 form relevant prior art for the invention presented herein: These documents present concepts for forming optical freeform surfaces from curable liquid materials and propose piezo-actuators for deforming a membrane or mold in touch with said liquid, respectively.

Starting out from this technical background, the present disclosure aims at providing a novel fabrication process for lowering the fabrication cost of customized FFO-components and also to provide novel types of FFO-components and optical assemblies based on such components. It is a further object of the present disclosure to improve the shape fidelity and accuracy of FFOs defined with said process.

In accordance with the present invention, a fabrication process is proposed according to claim 1, which solves the afore-mentioned problem. In particular a process is proposed as introduced at the beginning, which, in addition, is characterized in that a volume of a solidifiable liquid is deformed into a liquid shape defining the freeform optical surface (FFOS) by an actuator that exerts actuation forces on the liquid. Moreover, it is proposed that the liquid is solidified to form a non-tunable optical layer of the component to be fabricated and that the freeform optical surface is frozen into its final shape by solidifying the liquid. Most preferably, the actuator will be reconfigurable such that it can be tuned to define various different FFOS. The liquid shape thus forms a targeted liquid surface defining the FFOS. In detail, said actuator features multiple actuation elements which can be driven individually to deform the liquid shape locally and which are each designed to exert a local actuation force on the liquid within an optical aperture of the optical component that is relevant to the desired optical phase-shift ϕ(ρ,θ).

This process is especially suited for defining small, thin optical layers defining a desired FFOS and for low volume manufacturing such as prototyping. However, the process is not only suitable for fabricating a particular design of a FFOS at low cost, or a particular master structure, but also allows rapid fabrication of large volumes of 1^{st} generation FFOS (i.e. FFOS not replicated from a master) that are each customized to a particular need at much lower costs as compared to existing techniques. For example, in retinal imaging, as an example of an application case, one needs a different FFOS for every patient. The above process can meet this demand, as the fabrication is highly adaptive.

The fabrication processes presented herein thus opens up a new path for manufacturing case-specific or system-specific FFOS, i.e. FFOS that can deliver an optical phase-shift that is required in a particular application case or for example in an particular already assembled optical system.

In other words, the tuning of the liquid shape can be based not only on a specific target function defining a specific FFO-design to be fabricated but also on external metrology data, for example from a patient or from another optical component such as an already assembled optical system. For example, the liquid shape can be tuned such that the phase-shift resulting from the fabricated FFOS is suitable for compensating optical aberrations that are remaining after assembly of said optical system. By adding the fabricated FFOS to the system, the aberrations can then be greatly reduced. As every assembly will be different, a specific correction and hence a specific FFOS will be needed for each optical system. The process presented herein can meet such demands rapidly and at low costs. This first process is hence particularly suited for tailor-made fabrication of a single specific FFOS, for example during product development or prototyping; the process may also be used for a specific FFOS that compensates a particular aberration arising from another optical component or optical assembly.

The liquid volume that is tuned into the desired liquid shape may have different sizes, in particular of microscopic dimensions; as a result, the resulting height of the optical layer may be below one 1 mm or even below 0.5 mm in some designs; in others, it may be thicker. However, the process may also be used for defining macroscopic FFOS with dimensions of millimeters to centimeters or larger, in particular with respect to the optical aperture of the FFOS. This is a big advantage in comparison to additive manufacturing techniques, which typically result in longer fabrication times, the larger the structure and the higher the feature resolution required.

In other words, it is proposed to employ a liquid as an optical layer in an optical component and to define a FFOS (which may be used as a transmissive or reflective optical surface later on) of said component by first bringing the liquid into a desired shape profile (by deforming and/or displacing the liquid) using an actuator. Afterwards, this shape profile can then be fixed by solidifying the liquid, preferably while the liquid shape is maintained with the actuator.

To allow a high accuracy of definition of the FFOS, it is desirable if the actuator remains in place during the solidification of the liquid. In fact, as will be explained in greater detail below, the actuator may be actively tuned during the solidification of the liquid, in particular based on some metrology data of the FFOS, which may be recorded live during the solidification of the liquid. This approach allows a direct cause-effect feedback, which can improve the shape fidelity of the FFOS finally fabricated. In addition, as will be outlined below, the actuator may feature a passive liquid (which may be different from the solidifiable liquid) for improving the tunability of the actuator.

The liquid may thus be characterized in that it offers some means (e.g. a cross-linking agent, a chemical reactivity or the like) enabling a solidification into a permanent shape profile (defining the FFOS).

Another important aspect is to take shape deformations into consideration that are caused not by tuning the liquid (this would be the primary shape deformation effect) but by shrinkage and other material effects occurring inside the solidifiable liquid during or even after its solidification (secondary shape deformation effects). Therefore, it is proposed to model such secondary effects occurring during solidification of the liquid and affecting the final frozen freeform optical surface. This may be done, for example, based on material data, material characterization experiments and sophisticated computer-implemented-modeling techniques such as the finite element method (FEM). Moreover, such modeling can also take into account the desired FFOS to be fabricated, i.e. its particular shape and volume distribution.

Following this approach, it is proposed that the actuator is tuned to cause a deformation of the liquid shape that compensates at least part of a modeled secondary shape deformation effect (that actually occurs in the liquid during or after solidification). This tuning can be done prior to and/or during solidification of the liquid. Hence, this approach can lead to a pre-compensation of secondary effects that affect the final FFOS and thus to a higher shape fidelity of the FFOS and thus to achieving more accurately a desired phase-shift. The fabricated FFOS may then be characterized using suitable metrology means, and the resulting data can then be used for readjusting the model of the secondary effects, also taking into account other experimental conditions such as a heating temperature or an intensity of UV-irradiation applied to the liquid for solidification.

The non-tunable freeform optical surface, which can be described as a surface profile FFOS(x,y) in the x-y-plane, may introduce a constant optical phase-shift during use of the optical component. This phase-shift allows reshaping of an incoming wavefront hitting the FFOS, as is known to those skilled in the art.

The FFOS fabricated with the process may be preferably smooth with a continuous profile (i.e. without steps, as for example in a Fresnel lens) but without rotational or translational symmetry (i.e. a "freeform" optical surface = FFOS), in particular with respect to a main axis normal to a mean plane. This is because such continuous shape profiles are ideally suited for the fabrication process proposed herein.

The term "freezing" may be understood here as transferring the liquid (and thereby the FFOS) into a permanent shape profile and/or as defining a permanent surface profile of the FFOS that does not change over time (apart from unavoidable changes due to thermal expansion of the solidified liquid or because of mechanical stress, for example). Hence, the FFOS is only tunable before or during the solidification of the liquid but is rendered non-tunable after completion of the solidification of the solidifiable liquid.

The term "optical layer" may be understood here in that the layer offers an optical grade surface; however the layer may not be necessarily transparent, in particular if the FFOS is used as a reflective optical surface of the component.

As has been stated above, a second process is proposed, which is particularly suited for rapid fabrication of customized high quality first generation FFOs. Hence, to solve the afore-mentioned problem, a process for fabrication of non-tunable freeform optical surfaces (FFOS) of various profiles z(x,y) is proposed, which may have all or some of the features discussed above with respect to the first fabrication process proposed.

To solve the problem, the fabrication process employs a multitude of carrier surfaces. These surfaces may be provided by a carrier substrate or carrier body for example. Of course, it is equally possible to use a number of carrier substrates or carrier bodies (in particular arranged on a common support such as a chuck), each carrying a respective one (or several) of the multitude of carrier surfaces. Each carrier surface can be designed to carry a non-tunable optical layer formed by a solidified liquid.

In addition, the process employs at least one actuator configured to deform liquid volumes (of a respective solidifiable liquid) into various liquid shapes (depending on the targeted FFOS).

For efficient parallel fabrication, it is preferable if the process employs a multitude of individually tunable actuators each configured to define/tune a particular FFOS to be fabricated, because in this case, these actuators may be used simultaneously for speeding up the process.

In addition, one common liquid or at least two different liquids may be used as a solidifiable liquid in the process. By using different types of solidifiable liquids, the refractive index of the respective optical layer formed by solidification of the respective liquid can be adjusted, leading to a larger freedom of design.

Each of said liquid shapes can define a specific one of the FFOS to be fabricated with the process, and these FFOS (i.e. the optical layers defining the FFOS) may be formed from different ones of the at least two different liquids. Again, each of the liquid shapes may thus form a particular targeted liquid surface defining the desired FFOS.

It is understood, that, after completion of the process, each one of the carrier surfaces will be equipped with a particular solidified optical layer formed by solidifying the respective liquid volume and defining a specific FFOS.

The fabrication process is further characterized in that a respective liquid volume of a solidifiable liquid is dispensed on each of the multiple carrier surfaces, respectively. Each liquid volume can then be deformed to define a respective FFOS. This deformation may be done consecutively, using the at least one actuator, in particular each time. Or, the deformation may be done in parallel (i.e. simultaneously) using a multitude of actuators (at the same time, but, for example, tuned to equal or different shape profiles Q(x,y)). Finally, the liquid volumes may each be solidified, which can also be done in parallel or consecutively.

Depending on the particular process, different one of the carrier surfaces may thus carry different solidified liquids (e.g. to allow the exploitation of different refractive indices of the different solidified liquids) and/or carry different types of FFOS, which may vary in their particular surface profile. Hence, although intended for high-throughput-fabrication, the above process allows high freedom of design / high freedom for defining customized FFOS that solve a particular optical task (e.g. such as compensating the aberrations introduced by and measured from a second optical component).

Using this approach, it is possible to form respective non-tunable optical layers (on each of said carrier surfaces) and/or to freeze the respective FFOS (on the respective carrier surfaces of the carrier substrate or carrier body) by solidifying the respective solidifiable liquid volume dispensed on the respective carrier surface.

This fabrication process also forms the basis of a specific fabrication setup to be explained further below.

According to a specific variant of this process, each carrier surface may feature a liquid confinement structure, such as a coating (in particular a hydrophobic or hydrophilic coating) or a sidewall or ridge, for confining the liquid to the respective carrier surface prior to solidification. One advantage of using such a confinement structure is that an area of the carrier surface occupied by the liquid can remain constant (immobile), while the liquid is reshaped with the actuator, which is important for reliable and reproducible tuning of the liquid shape.

The confinement may be a micro-structure with dimensions in the order of micrometers (e.g. with respect to height or thickness). Such an approach is particularly useful if the FFOS are small and the necessary liquid volumes are of microscopic dimensions (e.g. µL to mL liquid volumes). If larger liquid volumes need to be handled, larger confinement structures such as rigid sidewalls can be used, with dimensions of several mm or even larger.

Further embodiments of these two processes are defined in the sub-claims and will be explained in the following: For example, one particular proposal is to employ a live-monitoring of the FFOS to be fabricated, in particular a live-monitoring of the liquids shape prior to or during solidification of the liquid. Such monitoring may be achieved directly or indirectly, for example by optically measuring the deformation of a membrane used for tuning the liquid shape.

In addition, it is possible to apply some fine-tuning to the liquid shapes, in particular during solidification of the solidifiable liquid, by fine-tuning the actuator / said actuators, preferably based on said live-monitoring.

For this purpose, the processes outlined so far can be elaborated by live-monitoring a profile z(x,y) of the liquid shape during the deformation of the liquid with the respective actuator, which is applicable to all fabrication processes presented so far. The monitoring may be done, in particular, by: computing at least one optical figure of merit parameterizing the FFOS; and/or by optically measuring a profile z(x,y) of the liquid, in particular through analysis of a wavefront transmitted through the FFOS or reflected by the FFOS; and/or by, preferably optically, measuring a shape profile Q(x,y) of an actuation membrane employed to deform the liquid into the liquid shape of profile z(x,y).

In all of these cases, the liquid shape may be fine-tuned using the actuator based on the live-monitoring, in particular based on measured metrology data. This can be done, most preferably and most efficiently, when said live-monitoring is continued while solidifying the liquid and/or when the fine-tuning is adapted during solidification of the liquid based on the continued live- monitoring (i.e. based on metrology data acquired during the solidification of the liquid).

In particular cases, which will become evident from the description of the drawings, the condition may hold that z(x,y)+Q(x,y) = const., i.e. Q(x,y) can be just the inverse (or negative) of z(x,y). Using this assumption, a simple control mechanism can be implemented for achieving a high shape fidelity of the FFOS.

The processes outlined so far are also particularly adapted for fabricating components with multiple FFOS. For example, imagine a complex prism-like optical component featuring one transmissive and two reflective FFOS, which can allow ultra-compact optical designs. Hence, the optical component fabricated with the process may feature at least two non-tunable freeform optical surfaces (FFOS). In this case, the processes described so far may be used to define the at least two non-tunable FFOS consecutively or in parallel.

Such an approach may be used for rapid fabrication of multiple FFOS on a single substrate or body (thus forming multiple optical components, each with at least one FFOS) or for fabrication of complex components, each component featuring multiple carrier surfaces and each carrier surface carrying a non-tunable FFOS, in particular fabricated with the single-fabrication-process described before.

As has been sketched before, one specific actuator design appears most suitable for implementing the processes discussed so far. The processes, as already described before, are therefore further characterized in that the actuator employed for defining a particular liquid shape (and thereby a particular FFOS) features multiple actuation elements that can be driven individually. As mentioned, this concept enables deformation of the liquid shape locally.

Using this approach, the liquid can thus be deformed into various liquid shapes each defining a respective desired freeform optical surface. This may be done repeatedly, each time driving the multiple actuation elements in different ways (using suitable control electronics) thereby defining various different liquid shapes / FFOS. The actuator can thus define various FFOS to be fabricated.

Each of the actuation elements of the actuator is thus designed/employed to exert a local actuation force on the liquid, and this is done, in particular, within an optical aperture of the component relevant to the desired optical phase-shift.

Different from a simple imprint-process using some sort of master stamp, the actuator proposed is distinguished from such known approaches that it may be pressed into a liquid to transfer a pre-defined surface shape into the liquid, but that this surface shape is variable, depending on the actual tuning of the actuator. In other words, the actuator may form a reconfigurable stamp for defining various liquid shape profiles (each intended to be frozen into a FFOS).

As detailed in claim 1, the local actuation forces exerted by the actuator are distributed over an optical area of the optical component (i.e. over said non-tunable optical layer), which defines an optical aperture of the component. This optical area may be designed for re-shaping an incoming wavefront by said phase shift resulting from the fabricated FFOS.

A particular suitable approach is to employ a membrane for transferring the actuation forces from the actuator onto the liquid. This membrane may be a tunable membrane that remains in the component after freezing it into a certain shape by solidifying the liquid. Or the membrane may be a separate actuation membrane belonging to the actuator and not forming a part of the component to be fabricated. Of course, these two alternative approaches may also be combined.

Generally speaking, the actuator may thus exert the actuation forces via a membrane, which forms an interface with the liquid. In particular cases, this membrane may be an actively tunable membrane, which may be actuated by electrostatic or piezoelectric actuation. Or the membrane may be a passively deformable membrane, e.g. actuated by a separate micromechanical actuator. In addition or as an alternative, the membrane may be part of the component and it may thus form the frozen freeform optical surface (which is finally used to introduce the desired phase-shift).

Alternatively, the membrane can be removed after solidifying the liquid, for example by an additional etching process. In this case, the optical layer (formed by the solidified liquid) will form the frozen FFOS of the component.

Finally, it is also possible that the membrane is a (separate) actuator membrane, which is part of the actuator but not part of the fabricated component.

In all of these different cases, the liquid shape may thus not be defined by surface tension (which typically results in minimal surfaces, typically spherical liquid surfaces) but by actuation forces exerted by the actuator on the liquid and conveyed to the liquid via an intermediate membrane.

According to another preferred choice for the actuator, it may be equipped with a separate passive liquid. Hence, the actuator may comprise a passive liquid, which may be in particular different from the solidifiable liquid of the component. Furthermore, this passive liquid may form an interface with an actuation membrane of the actuator. Using this approach, it is possible that the actuator offers a push-pull actuation of the actuation membrane based on hydro-mechanical coupling delivered by the passive liquid; i.e. by pulling the membrane, the actuator may pump liquid, for example from an outer area into an inner area, and thus push up the membrane in the center.

For example, the actuator may feature an tuning area corresponding to an optical aperture of the FFOS to be fabricated and the actuation membrane and the passive liquid may extend beyond this tuning area thus allowing push-pull actuation of the actuator membrane.

In case, a reflective FFOS is to be fabricated, the process can also comprise the adding of reflective coatings. For this purpose, a reflective coating may thus be added on the frozen FFOS to render the FFOS reflective.

The solidified liquid can be transparent. In this particular case, light may thus be reflected on an internal interface between the optical layer (formed from the solidified transparent liquid) and the reflective coating; i.e. the light may be transmitted through the optical layer before impinging on the internal reflective FFOS.

If an external reflective FFOS is desired, the solidifiable liquid does not have to be transparent but can also be opaque (at least in the wavelength range intended for use with the fabricated component).

There are a number of other features, by which the processes explained so far may be elaborated. For example, as already explained, the optical layer may be formed on a carrier surface of the component to be fabricated. This carrier surface may carry an actuation means of the actuator, i.e. the actuator may thus be formed, at least in part, by the component itself. In other words, the final fabricated optical component may actually comprise at least part of the actuator that was used for its fabrication. Hence, different from state-of-the-art approaches, it is suggested to fabricate a passive optical component from a tunable optical component.

Concerning the solidifiable liquid, there exist manifold ways of achieving a solidification. For example, the solidifiable liquid may be solidified by thermal curing, in particular thermal cross-linking, by UV-curing, by chemical curing, in particular chemical cross-linking (e.g. using two-component-epoxies, in particular with a retarder agent for slowing down the chemical reaction). It is also possible to use ultra-fast cross-linking liquids, in particular to achieve high throughput in the fabrication of the desired FFO-components.

To achieve the other objectives mentioned at the beginning, an optical component is proposed which features at least one non-tunable freeform optical surface, which has been fabricated using a process according to one of the claims directed towards a fabrication process or as described before. Such a component can be fabricated at low costs with high shape fidelity.

In particular, a non-tunable membrane may be in direct contact with the solidified liquid.

Moreover, a reflective coating may be deposited on the FFOS, i.e. in particular directly on the solidified liquid or on an outer surface of the membrane. In both cases, external and internal FFOS can be defined (depending on the transparency of the solidified liquid and/or the transparency of the optional membrane).

The non-tunable membrane can thus be tunable before solidification of the liquid and may be frozen into a particular shape together with the liquid after completion of the solidification of the liquid.

All components discussed so far can be fabricated with a FFOS that may be reflective or transmissive. It is also possible to fabricate components that feature reflective and transmissive FFOS.

As already mentioned, the solidified liquid forming the optical layer of the component may be transparent, e.g. in case of a transmissive component or when using an internal reflective FFOS; in other cases, it may be opaque, e.g. when using an external reflective FFOS of the component.

Using the concept proposed herein, it is also possible to define and fabricate novel optical assemblies, in particular a multi-component imaging or illumination optics assembly. Such an assembly may be characterized in that the assembly features at least one non-tunable FFOS that has been fabricated using a process according to one of the claims directed towards a fabrication process or as described previously. Alternatively, or additionally, the assembly may feature an optical component according to one of the claims directed towards an optical component or as described previously.

Finally, in the context of the concept presented herein, a fabrication setup is proposed for fabricating non-tunable FFOS of various profiles z(x,y) according to claim 10. This setup is based on the concept of deforming a solidifiable liquid into various liquid shapes defining the respective desired FFOS to be fabricated, and comprises actuation means configured for tuning the various desired liquid shapes. The setup may also feature control electronics for driving said actuation means. Preferably, the setup can also comprise metrology means (optical metrology means are best suited for the task but other technologies can also be used) configured to monitor a profile z(x,y) of the liquid shape (that is achieved by tuning the volume of solidifiable liquid). Thereby, the setup can enable a live-monitoring and/or a fine-tuning, as was detailed above. Suitable metrology means can be a wavefront sensor integrated into the setup, for example, or at least some sort of relay-lens integrated into the setup, that enables optical inspection of the liquid profile with an external metrology device. The actuator employed in this setup features multiple actuation elements which can be driven individually to deform the liquid shape locally and which are each designed to exert a local actuation force on the liquid within an optical aperture of said optical component that is relevant to a desired optical phase-shift ϕ(ρ,θ).

In detail, using the control electronics, the actuation means - which may form a complete actuator themselves or which may form an actuator when combined with the component to be fabricated - may be tuned into various different profiles Q(x,y) each one defining a corresponding liquid profile z(x,y) to be frozen into a permanent FFOS of profile z(x,y) (which apart from minor shape deformations due to temperature changes and/or shrinkage will be identical to the liquid profile).

Using this approach, the control electronic can thus deform the liquid into the various liquid shapes by driving the actuation means accordingly. It is important to understand here that the actuation means are thus specifically configured and adapt for bringing the liquid into a liquid shape that forms a freeform optical surface (as defined above).

In particular, said control electronic may be configured to be driven based on some metrology data that is live-acquired from the actuator or from the liquid shape just tuned with the actuator.

The actuator itself may be designed and configured as has been explained with reference to the fabrication process presented herein.

For allowing to implement such a fabrication process, the setup does not necessarily need to feature a complete functional actuator (although it can feature a complete functional actuator as described above), because part of the actuator (for example a tunable membrane and/or actuator electrodes) may be part of the component that is fabricated with the setup (as will become clear from the figures presented herein). However, in this case, the functional actuator required for implementing the fabrication process will be completed as soon as the parts of the component to be fabricated (e.g. a blank substrate carrying actuation electrodes to be driven by the control electronics and working in conjunction with said actuation means and the liquid or a carrier substrate carrying the liquid and a tunable membrane that is tuned by the actuation means) are placed into the setup.

Such a setup may further comprise means for inducing solidification of the liquid such as a heat source or an UV-light source. It may also comprise the at least one carrier surface mentioned before, in particular formed by one or more carrier substrates or carrier bodies. This at least one carrier surface may be replaced after completing the fabrication, i.e. this part of the setup ay be exchangeable.

It is conceivable, that the above setup may be used to great advantage when performing one of the fabrication processes described before or according to a claim directed towards a fabrication process.

According to a particular first embodiment, the setup may comprise an actuation substrate carrying at least one first actuation element, in particular a multitude of first actuation elements, for deforming a membrane that is configured to form an interface with the solidifiable liquid during solidification of the liquid.

This particular setup may also comprise a carrier substrate carrying corresponding at least one second actuation element, in particular a multitude of second actuation elements, which is/are designed for interaction with the at least one first actuation element and thus for deforming said membrane. This approach can be used with all the different types of actuator designs explained previously with respect to the various types of possible membranes.

Accordingly, the at least one first actuation element and the at least one second actuation element may thus form an actuator (in particular characterized as described previously) for deforming the liquid into a liquid shape defining a specific FFOS.

According to a second embodiment, which is particularly suited for rapid fabrication of customized FFO-components, the setup may comprise at least one (fully functional) actuator configured to tune a separate actuation membrane (which is not part of the component to be fabricated but part of the actuator). If parallel and rapid fabrication of a number of FFOS is desired, a number of actuators can be employed in the setup and each actuator can be driven individually with the control electronics to define a specific FFOS. But even when using a single tunable actuator in the setup, this actuator may be used in a step-and-repeat fashion to stamp various liquid shapes into solidifiable liquid volumes dispensed on respective carrier surfaces. Each time, the actuator may be used to transfer a common or a specific individual surface profile into the liquid. In other words, the setup can be used both for rapid fabrication of identical FFOS as well as for rapid fabrication of tailor-made different types of FFOS.

When using at least one complete actuator in the setup, the actuation membrane can be configured to be in contact with the liquid during solidification of the liquid to define the various liquid shapes and thus the resulting freeform optical surfaces. This approach has the advantage that the actuation membrane may re-used many times and that the component must not feature its own deformable membrane, i.e. the final fabricated component can be membrane-less.

Concerning the two embodiments, it is clear that the control electronics can be configured to drive said 1st and 2nd actuation elements and/or to drive said at least one actuator featuring said actuation membrane. In particular, said control electronics can thus be configured for tuning said separate actuation membrane into various profiles Q(x,y).

Finally, the concept presented herein also comprises a specific use of an actuator according to claim 14 for tuning a liquid shape of a solidifiable liquid that forms an optical layer of an optical component to be fabricated with the actuator. This optical layer can later define a non-tunable FFOS after solidification, as has been detailed above. The actuator chosen for this particular use may be designed as has been detailed before, in particular with a passive liquid and a push-pull-actuation design based on fluidic cross-talk. The actuator employed features multiple actuation elements which can be driven individually to deform the liquid shape locally and which are each designed to exert a local actuation force on the liquid within an optical aperture of said optical component that is relevant to the desired optical phase-shift ϕ(ρ,θ).

In particular application cases, the use can be further characterized in that at least part of the actuator (for example second actuation elements of the actuator such as a uniform electrode deposited on a deformable membrane) or the complete actuator itself, may form a part the completed component. In particular cases, the complete actuator may be formed by the component itself (and remain with it, at least in part, after completion of the fabrication; e.g. the membrane may be stripped afterwards, but actuation electrodes may remain inside the component, also not usable any more after solidification of the liquid).

In other words, it can be useful in certain cases to incorporate part or all of the actuator (used for defining the particular liquid shape to be frozen into a specific FFOS) into the optical component that is fabricated using the actuator. For example, when fabricating a reflective FFOS from a membrane that offers a reflective coating, this membrane may be deformed by using the actuator that is formed from this tunable membrane (as 2^{nd} actuation element) and further actuation means (used as 1^{st} actuation element(s)).

This concept thus suggests using a tuning-mechanism that is built in part into the component to define a specific FFOS and to switch this tuning mechanism off by solidifying the liquid and thus freezing the mechanism. As a result, various types of complex FFOS can be fabricated at low costs.

For example, the optical component may comprise a tunable membrane and actuation means, such as a deformable electrode deposited on said membrane, to be used for tuning the liquid shape. The membrane and the electrode may remain part of the component, but they will not be employed during use of the component as a passive (non-tunable) optical FFO-component. This is because once the membrane is frozen into the FFOS, it will no longer be tunable.

As already said, the actuator may comprise a passive liquid that allows push-pull actuation of an actuator membrane (via hydro-mechanical coupling as explained above). In this case, it can be preferable to employ at least one compensation actuation element, which is arranged outside of an tuning area of the actuation membrane, the tuning area being used to define the FFOS. This approach allows a larger tuning range and thus the fabrication of more complex FFOS.

Most preferably, a multitude of compensation actuation elements may be used for this purpose. These elements may be distributed outside of the tuning area of the membrane of the actuator, in particular in a peripheral area, which surrounds said tuning area.

There are a number of technologies which may be used for implementing the actuator described so far. For example, the actuator may be an electrofluidic actuator comprising a passive liquid; and/or an electrostatic actuator; and/or a piezo-electric actuator; and/or a mechanical actuator featuring a multitude of mechanical drives; and/or an electromagneto-fluidic actuator, for example realized by using a ferric liquid as the passive liquid of the actuator and/or electromagnetic actuation for deforming the passive liquid. The use of "and/or" here indicates that these technologies may also be used in combination for conceiving more sophisticated actuator designs. Moreover, these technological options may each be combined with a suitable passive liquid to obtain, in each case, an electrofluidic actuator as the more general concept.

The mentioned mechanical drives may be in the form of electromechanical drives, preferably implemented using MEMS-technology (i.e. MEMS-drives).

Most preferably, the actuator can be an electrofluidic actuator based on electrostatic actuation of an actuation membrane. It is understood here, that all of these options can be applied also to the fabrication setup and processes previously described.

Preferred embodiments will now be described to serve as examples of the concept presented herein.

With reference to the accompanying drawings, which are purely schematic illustrations without claiming any detailed resemblance with real embodiments in terms of size and dimensions and wherein features with corresponding technical function are referenced with same numerals even when these features differ in shape or design:
- Fig. 1: presents two cross-sections of classical optical components,
- Fig. 2: shows a top view on a freeform surface profile of a first component, fabricated with a method according to the invention,
- Fig. 3: illustrates two cross-sections through the freeform optical surface (FFOS) of Figure 2,
- Fig. 4: illustrates the fabrication of a freeform optical phase plate according to the invention by illustrating various cross-sections taken at different points in time during the fabrication,
- Fig. 5: illustrates a cross-section through a complex optical component featuring an FFOS fabricated with the method,
- Fig. 6: illustrates a cross-section through a possible actuator that may be used for defining various liquid freeform profiles,
- Fig. 7 - 10: illustrate electrostatic actuation of a membrane for defining a FFOS during fabrication,
- Fig. 11-14: illustrate piezoelectric actuation of a membrane for defining a FFOS during fabrication, wherein
- Fig. 12 and 14: do not fall under the scope of the claimed invention,
- Fig. 15 and 16: illustrate live monitoring of a liquid freeform profile defined using an actuator,
- Fig. 17 to 19: illustrate a step-and-repeat-process for rapid fabrication of optical components of various customized FFOS,
- Fig. 20 to 22: illustrates an array-process for rapid fabrication of customized optical components of various FFOS,
- Fig. 23: an optical component featuring a built-in actuator 7 used for defining a non-tunable FFOS,
- Fig. 24: details of a preferred actuator for defining various liquid freeform profiles, and
- Fig. 25: details of a preferred actuation design for an electrofluidic actuator to be used for fabricating FFOS.

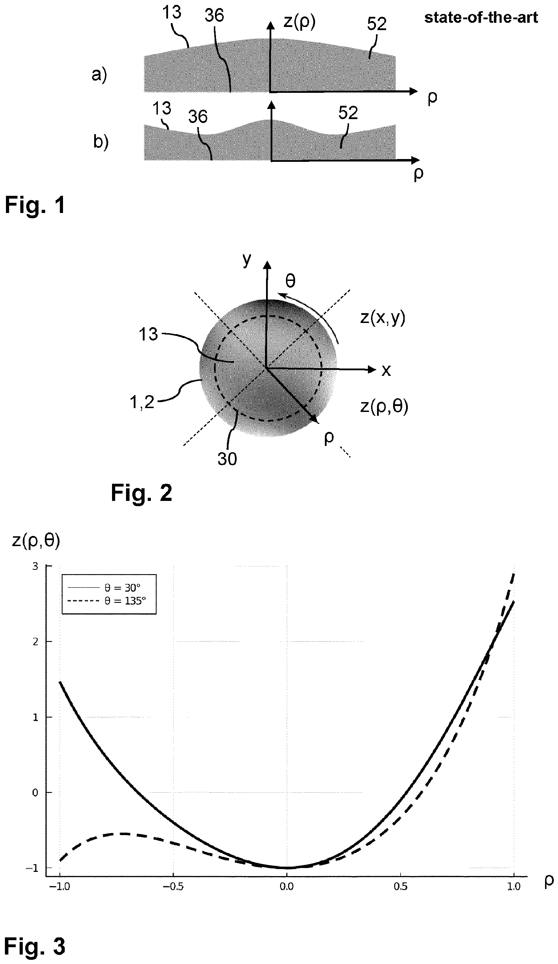

Figure 1 presents two examples of cross-sections of two classical optical components, namely a) a spherical plano-convex lens 52 with a surface profile z(ρ) with ρ being the radial coordinate and z(ρ) the height of the profile above the mean plane and b) a lens 52 with aspherical profile. Both lenses are designed and manufactured with perfect rotational symmetry.

By contrast, Figure 2 presents a top view on a surface profile 13 of a first optical component 1 fabricated with a method according to the invention, where the gray value represents the local z-height of the profile 13. This surface profile 13 (z(x,y) or z(ρ,θ) depending on the coordinate system chosen), can be described by the formula z = 1.0*Z2,0 + 2.0*Z2,2 + 0.3*Z3,3 + 1.4*Z3,-3 + 1.0*Z5,5, with Zm,n being the Zernike polynomial Z of coefficient m, n. This profile z(x,y) 13 lacks translational or rotational symmetry about axes normal to the mean plane 36 and thus represents a freeform optical surface 3 (FFOS). In other words, height profiles along perpendicular cross-sections of the profile 13 (as indicated by the dashed lines) in Figure 2 will be different for this component 1, which forms a freeform optical phase plate 2 (FFPP). Another way of looking at this component and/or of characterizing its FFOS 3 is that the FFOS 3 introduces a phase-shift ϕ(ρ,θ) that varies both with the radial coordinate ρ as well as with the azimuth angle θ (cf. Figure 2).

Yet another way of defining a FFOS 3, in distinction from classical optical surfaces as the ones shown in Figure 1, is that when taking any cross-section (within in a range ρ = [0..Rₘₐₓ] with Rₘₐₓ the maximum radius), for example from the FFOS shown in Figure 2, and rotating it around the optical z-axis by 360° thus producing a surface of revolution S, a FFOS will be characterized in that it will deviate from the surface S at least at one coordinate (but typically on multiple coordinates), in particular within the optical aperture. This is readily apparent by comparing the cross-sections through the surface profile 13 of Figure 2 at two different azimuth angles θ illustrated in Figure 3. It is also apparent, that there may be at least one cross-sectional height profile (at a certain angle θ), which lacks symmetry to the optical axis (running in the z-direction at x=0, y=0).

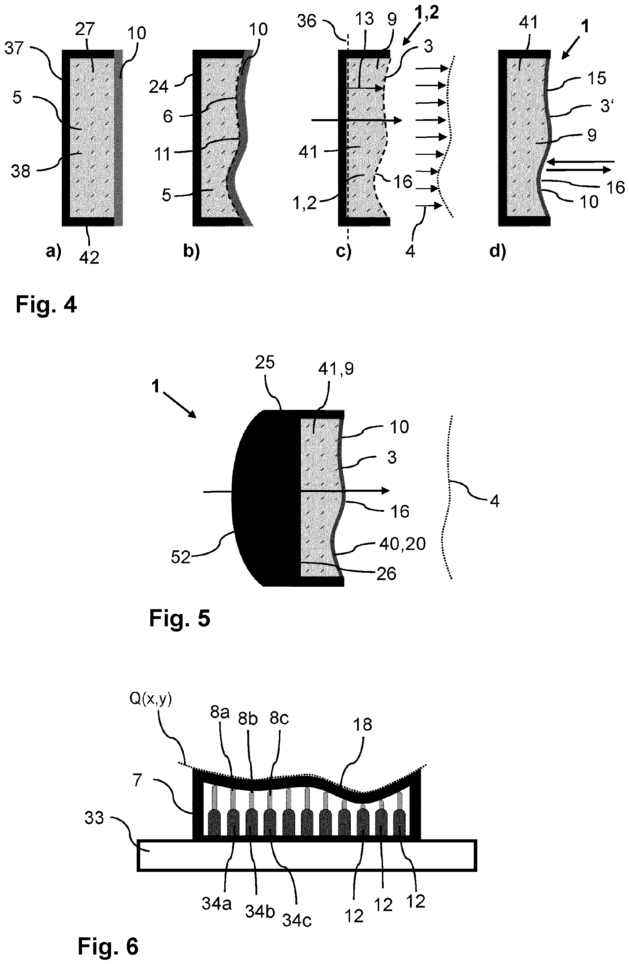

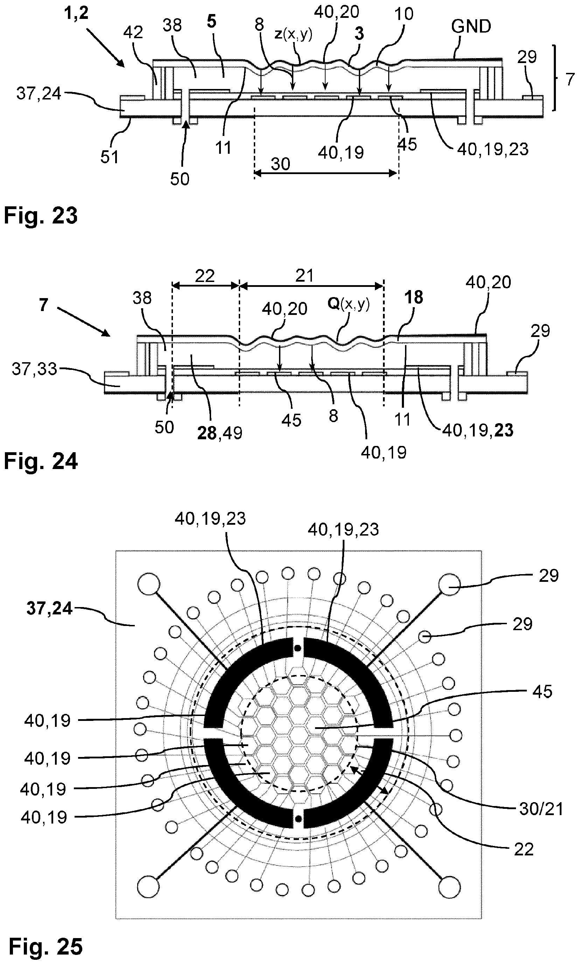

Figure 4 illustrates the basic concept of the fabrication process presented herein: Figure 4a shows a glass blank 37 serving as a carrier substrate 24 for carrying a solidifiable liquid 5 on a carrier surface 26. The liquid 5 forms a liquid volume 27 and is confined in space by a confinement structure 42 in the form of a spacer forming a sidewall; a deformable membrane 10 is attached to the spacer to form a liquid compartment 38; fluidic ports 50 as the ones depicted in Figure 23 may be used for filling in the liquid 5. Using a built-in actuator 7 (which will be detailed below), the liquid 5 is deformed into the liquid shape 6 illustrated in Figure 4b, by deforming the membrane 6 with local actuation forces 8 exerted by the actuator 7 on the membrane 6. At this point, the liquid shape 6 is already defining a freeform optical surface (FFOS) 3.

Next, the solidifiable liquid 5 is solidified into a solidified liquid 41 (which can be accompanied by a change of refractive index of the liquid) by thermal cross-linking to freeze/fix the desired FFOS 3 into a permanent shape profile 13. Hence, a solid, non-deformable and thus no longer tunable optical layer 9 is formed by the solidified liquid 41 (Figure 4b) that provides a surface profile 13 forming the desired FFOS 3.

From this point in fabrication, the membrane 10 may be either stripped, e.g. by wet etching, as illustrated in Figure 4c, thus resulting in a transmissive freeform optical phase plate 2. As depicted by Figure 4c, when light is transmitted through this phase plate 2, a constant phase shift 4 ϕ(x,y) is introduced that is proportional to the height profile 13 of the optical layer 9 (assuming a constant refractive index of the solidified liquid 41).

Alternatively, a reflective layer 15 may be added on the optical layer 9, either after stripping the membrane 10 as illustrated in Figure 4d, or on top of the membrane 10 (not illustrated), thus resulting in a reflective FFO-component 1. If the layer 15 is uniform, the resulting FFOS 3' will be an accurate copy of the FFOS 3 formed by the optical layer 9 (cf. Figure 4c vs. 4d). In other words, the optical component 1 illustrated in Figure 4d forms a FFO-mirror, which can introduce a desired constant phase shift 4 ϕ(x,y).

Figure 5 shows that the concept can be transferred to more complex optical components 1. Shown is a plano-convex lens 52 that serves as a carrier body 25 for providing a carrier surface 26. A similar process as illustrated in Figure 4 was used to bring the liquid 5/41 into the permanent shape illustrated in figure 5; a transparent membrane 10, featuring a transparent electrode 40 as a second actuation element 20 of the actuator 7 used for deforming the liquid 5 into the desired liquid shape 6 has been left on the optical layer 9 formed by the now solidified liquid 41. It is thus the membrane 10, not the optical layer 9 (as in Figure 4c) that forms the outer surface 16 of the component 1 that forms the desired FFOS 3, i.e. the membrane 10 is part of the component 1 and forms the frozen FFOS 3.

It is apparent in Figure 5 for those skilled in the art, that the phase shift 4 introduced by the FFOS 3 / by the layer 9 may be used for compensating optical aberrations introduced by the lens 52. After completion of the fabrication of the component 1 according to Figure 5, a non-tunable optical layer 9 formed by a solidified liquid 41 thus forms the FFOS 3 and a no-longer-tunable membrane 10 is in direct touch with the solidified liquid 41.

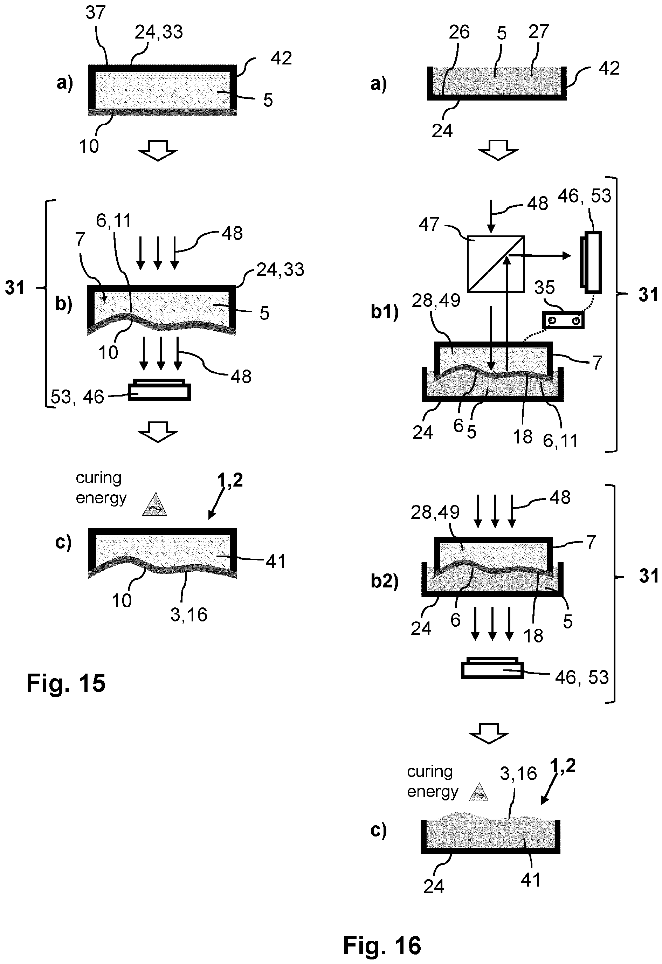

Figure 6 illustrates one possible implementation of an actuator 7 to be used for deforming a solidifiable liquid 5 into a freeform liquid shape 6: the actuator 7 features an actuation substrate 33 on which an array of MEMS-actuators 34 are arranged. Each of the MEMS-actuators 34 serves as an actuation element 12 of the actuator 7 and can push or pull the actuation membrane 18 (which itself is only passively deformable) and thus exert a local actuation force 8 on the membrane 18, such that it can be brought into a profile Q(x,y) forming the inverse of a desired FFOS 3 of height profile 13 z(x,y). As illustrated in Figure 16, the actuator 7 of Figure 6 may be used as a sort of stamp with variable stamp profile Q(x,y) for deforming a solidifiable liquid 5, deposited on a carrier substrate 24, into a desired liquid shape 6 defining a FFOS 3 (cf. Figure 16c).

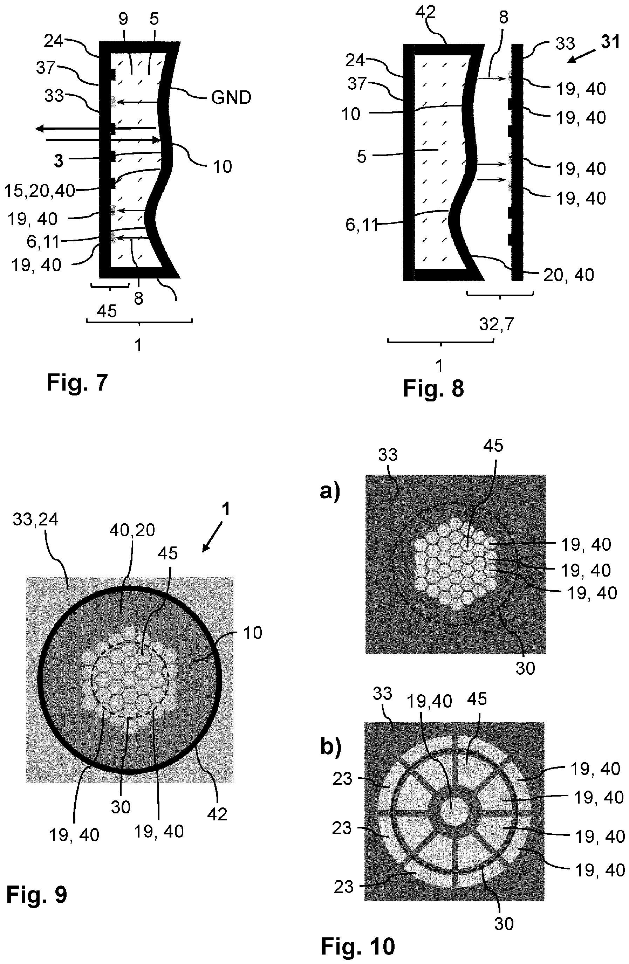

Figures 7 to 10 illustrate examples of various electrostatic actuation schemes that may be used in the fabrication process. The component 1 of Figure 7 features a built-in actuator 7 that is formed by a deformable membrane 10 that features a reflective and conductive coating 15 that forms an electrode 40 on the inner side of the membrane 10 and thus a second actuation element 20 of the actuator 7. Via the (internal) electrode 40, the membrane can be put on ground (GND) potential. On the carrier substrate 24 carrying the solidifiable liquid 5 but also serving as an actuation substrate 33, a transparent electrode array 45 is deposited, which is also illustrated in Figure 9; each of the hexagonal electrodes 40 serving as first actuation elements 19 of the actuator 7 can be individually addressed, such that each of these electrodes 40 can exert a local out-of-plane (w.r.t. the membrane 10) electrostatic actuation force 8 on the membrane 10. After freezing the membrane's 10 shape by solidifying the liquid 5, the reflective coating 15, which served as an electrode 40, now forms an internal reflective FFOS 3 and thus a complex non-tunable mirror. It is obvious, that the membrane 10 will no longer be deformable as soon as the liquid 5 is solidified.

In the second example of Figures 8 and 10, the actuator 7 is split up among the component 1 to be fabricated (which features a membrane 10 as well as a GND-electrode 40 deposited on top of the membrane 10 as a second actuation element 20) and a separate actuation substrate 33 (which may feature an array 45 of electrodes 40 as depicted in Figure 10a or as in Figure 10b) for electrostatic actuation of the membrane 10 and thus for deforming the solidifiable liquid 5 into the desired liquid shape 6. After freezing the liquid shape 6, again the membrane 10 may be stripped, resulting in a phase plate as the one depicted in Figure 4c; or a reflective layer 15 may be added (cf. Figure 4c); or - in case the membrane 10 is transparent - the membrane 10 may be left on top of the optical layer 9 formed by the then solidified liquid 41.

As in all previous discussed examples, the actuator 7 of Figure 8 exerts the actuation forces 8 via the membrane 10 which forms an interface 11 with the liquid 5. Both membranes 10 of Figure 7 and 8 can be actively tuned using the respective electrostatic actuation scheme.

Concerning the arrangement of the actuation elements 12 of the actuator 7 (which are formed in these electrostatic examples by the electrodes 40 of the array 45), it is visible in Figure 9 that they may completely fill an optical aperture 30 of the final fabricated optical component 1 (independent of the technology used for the actuator). In other designs, all of the actuation elements 12 may be placed within the optical aperture 10, as illustrated in Figure 10a. At least some of the actuation elements are arranged within the optical aperture 30, at least in the situation where the liquid shape 6 is actually frozen.

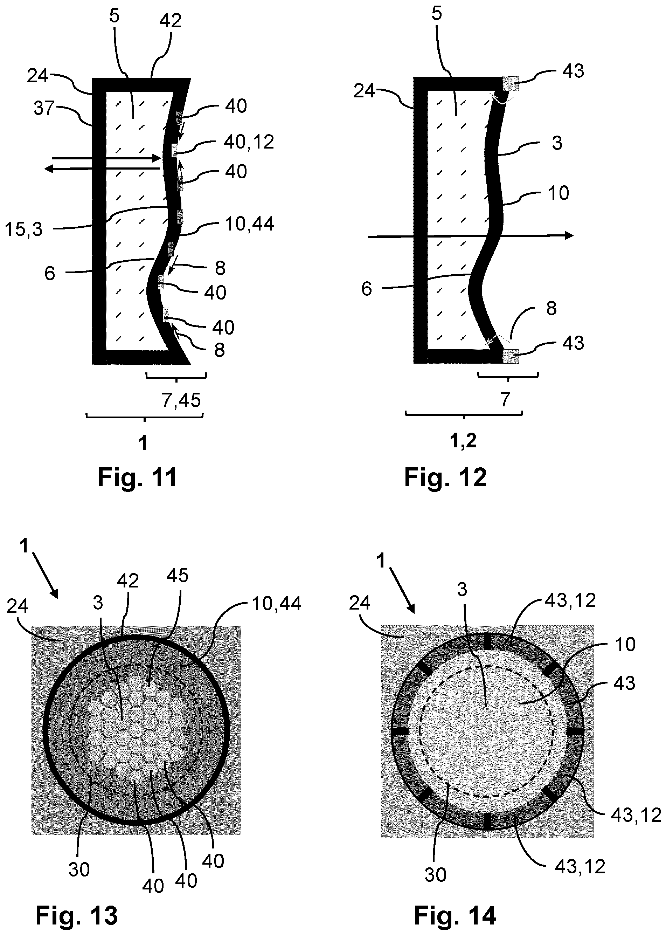

Figures 11 to 14 illustrate examples of various piezoelectric actuation schemes that may be used (alternatively) in the fabrication process. Figures 12 and 14 illustrate examples not falling under the scope of the claimed invention. The component 1 of Figure 11 is similar to that of Figure 7 but instead of using an electrode array 45 on the carrier substrate 24, the electrode array 45, which may have a design as depicted in Figure 13, is deposited directly on a deformable membrane 10 of a piezoactive material. Thus by applying different voltages to the various actuation electrodes 40 of the array 45, the membrane 10 can be locally deformed by local in-plane actuation forces 8, as illustrated.

Hence, in the example of Figure 11, the component features a built-in actuator 7 (thus no separate actuation substrate 33 is used in the fabrication of the component 1) that is formed by an actively tunable piezoactive membrane 44 and an electrode array 45 deposited on the membrane 44. If the membrane 10,44 features a reflective coating 15 on its inner side, as illustrated in Figure 11, an inner reflective FFOS 3 can be formed by freezing the liquid 5; alternatively, if no such layer 15 is used and both the membrane 44 and the array 45 are transparent, the component 1 may be used as transmissive optical component 1. In both cases, the tunability of the membrane 10 will be lost, as soon as the liquid 5 is solidified, resulting in a non-tunable FFOS 3.

The component 1 of Figure 12, which is a transmissive freeform optical phase plate 2, also features a built-in actuator 7, but uses a passively tunable transparent membrane 10. As shown by Figures 12 and 14 (which is a top view on the component of Figure 12), a total of 8 separated individual micro-piezo-actuators 43 are arranged outside of the optical aperture 30 in an annular region around the aperture 30. These actuation elements 12 of the actuator 7 can also exert local actuation forces 8 that lead to localized bending of the membrane 10; as the micro-piezo-actuators 43 can be driven individually, the membrane 10 and thus the liquid 5 can be tuned into various liquid profiles 6, prior to freezing the liquid 5 into an optical layer 9 of permanent height profile 13. In this particular case, the actuation forces 8 are applied from outside of the aperture 30 but still acting on the liquid 5 to deform it into the desired liquid shape 6 shown in Figure 12.

As illustrated by Figure 15 and 16, the liquid shape 6 may be live-monitored during the deformation. This may be done, for example, by inspecting, in particular optically measuring, the current profile 13 z(x,y) of the liquid 5, i.e. its currently tuned liquid shape 6. In the example of Figure 15, illustrating a fabrication process for a component 1 based on a built-in actuator 7, a wavefront sensor 46 as an optical metrology means 53 forms part of the fabrication setup 31 and is used to measure the tuned membrane 10 of the component 1 directly in transmission and thereby (indirectly) the liquid shape 6, i.e. the shape of the interface 11 formed between the solidifiable liquid 5 and the membrane 10, as shown in Figure 15 c. Prior to freezing the liquid shape 6, for example by UV-curing as shown in Figure 15c, the component 1 of Figure 15 may look as the one shown in Figure 23: This component 1 features a transparent membrane 10, with a transparent GND-electrode 40 deposited on the outer side, and an electrode array 45 for electrostatic actuation on a carrier substrate 24, carrying the solidifiable liquid 5. The membrane 10 is fixed to a spacer forming a liquid confinement structure 42; fluidic ports 50 are used for introducing the liquid 5 into the liquid compartment 38.

The built-in actuator 7 shown in Figure 23 and formed by the GND-electrode 40 on the membrane 10 and the electrode array 45 is suitable for tuning the liquid 5 in the compartment 38 into various different liquid shapes 6. Thus, the liquid 5 may be transferred into optical layers 9 of various profiles 13; i.e. many different liquid shapes 6 (within the tuning range of the actuator 7) may be frozen into respective permanent FFOS 3. Hence, this component 1 may be fabricated with tailor-made FFOS 3, as long at the profile 13 remains within the tuning range of the actuator 7.

In the particular case of Figure 23 / Figure 15, the complete actuator 7 used in the fabrication process forms a part of the completed / fabricated component 1. In the example of Figure 8, by contrast, only part of the actuator 7, namely the second actuation element 20 and the deformable membrane 10, are part of the fabricated phase plate 2 (although the membrane and the electrode 40 on top of it may be stripped after freezing the liquid 5, as was mentioned before - in this case, no parts of the actuator 7 would remain with the final component 1).

A slightly different approach is to use a separate actuator 7, for example as illustrated in Figure 24, which may feature its own actuation membrane 18 and also a passive liquid 28, which may be formed from a non-solidifiable transparent optical liquid 49, and forms an interface 11 with the membrane 18. In particular, as shown in Figure 24, the passive liquid 28 can allow push-pull actuation of the membrane 18, which is particular attractive for electrostatic actuation schemes. For this purpose, the electrofluidic actuator 7 of Figure 24 employs a multitude of compensation actuation elements 23 (in form of electrodes 40), which are distributed outside of an tuning area 21 (which is used for defining the FFOS 3 within an certain optical aperture 30) in a peripheral area 22 surrounding said tuning area 21, as is visible from the detailed top view of Figure 25, showing the electrode array 45 and compensation elements 23, which are both used in the built-in actuator 7 inside of component 1 of Figure 23 and the separate actuator 7 of Figure 24. Such a design can also be useful for piezoelectric actuation, as it increases the tuning range.

A separate electrofluidic actuator 7 as the one illustrated in Figure 24 may be used as deformable/ reconfigurable stamp for imprinting various liquid shapes 6 into a liquid volume 27 of a solidifiable liquid 5 deposited on a carrier surface 26 (cf. Figure 16a), as illustrated in Figures 16 b1) and 16 b2): If the actuation membrane 18 and the passive liquid 28 are transparent, the liquid profile 6 of the solidifiable liquid 5 may be inspected / measured during deformation of the liquid 5 in transmission, e.g. using a wavefront sensor 46 as illustrated in Figure 16 b2; another suitable approach, is to indirectly live-monitor the desired liquid shape 6 by inspecting the actuation membrane 18; this may be done in particular by inspecting the rear side of the actuation membrane 18, using a beam splitter 47 and a wavefront sensor 46, as shown in Figure 16 b1. In both cases, the actuation membrane 18 is used only for tuning the liquid 5 but does not form a part of the fabricated optical component 1.

Live-monitoring also offers the possibility of fine-tuning the liquid shape 6, in particular while solidifying the liquid 5; for this purpose, adequate control electronics 35 may be used (cf. Figure 16 b1), which can take into account metrology data derived from the live-monitoring. This way, the fine-tuning may also be adapted during solidification in case the almost frozen liquid shapes shows some unwanted shape deformations, for example due to material shrinkage or thermal expansion or the like. This is one option for improving the shape fidelity of the FFOS 3, i.e. the delta between a target surface profile T(x,y), describing a desired shape of the freeform optical surface, and the final frozen profile 13 z(x,y) of the optical surface after solidifying the liquid 5.

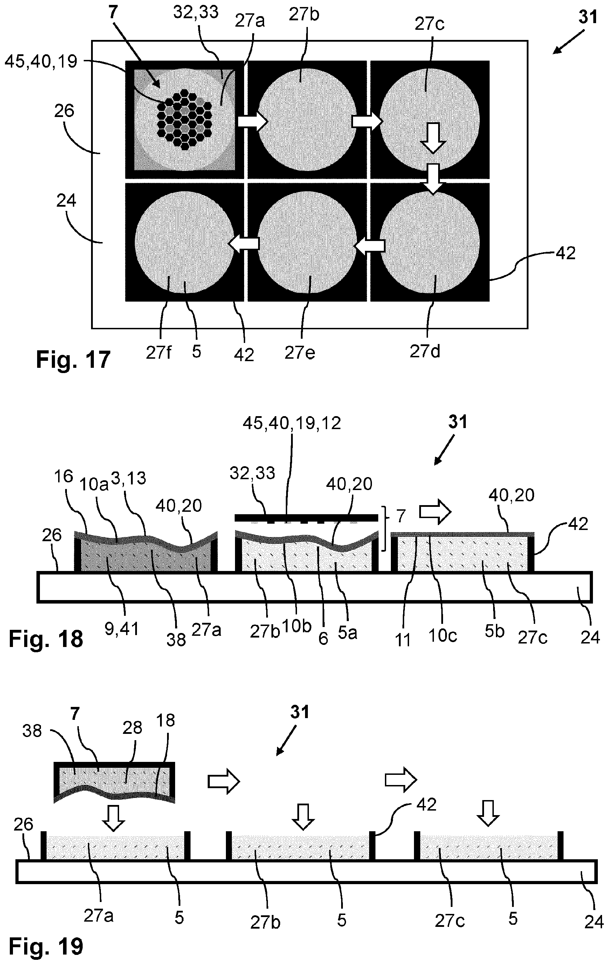

The present disclosure also concerns suitable processes for rapid fabrication of customized FFOS. Figures 17 to 19 illustrate a first example of a step-and-repeat process that employs a carrier substrate 24 featuring a multitude of carrier surfaces 26 each designed to later carry a non-tunable optical layer 9 of the frozen/solidified liquid 41. Furthermore the fabrication setup 31 illustrated in Figure 17 employs a single actuation means 32 for tuning various liquid shapes 6, which is moved from carrier surface 26 to carrier surface 16 in a step-and-repeat fashion, as illustrated by the block arrows in Figure 17.

In fact, the actuation means 32 may be a separate fully functional actuator 7 (in particular in a design according to Figure 24) that is moved as a reconfigurable stamp from liquid volume 27 to liquid volume 27, as shown in Figure 19, and used each time to deform the respective liquid volume 27 / the respective solidifiable liquid 5 into a desired liquid shape 6. In this case, the liquid shapes 6 may be frozen step-by-step, i.e. consecutively, each time solidifying the liquid 5, when the liquid 5 is in touch with the actuation membrane 18 tuned into a suitable specific profile Q(x,y). It is understood, that different solidifiable liquids 5 may be deposited on the various carrier surfaces 26, also with varying liquid volumes 27, and also the individual liquid profiles 6 may vary, as the actuator 7 can be re-tuned/reconfigured after each "step-and-repeat".

Figure 18 shows another possible implementation, where the actuation means 32 is formed by a simple actuation substrate 33 carrying an electrode array 45 with various hexagonal electrodes 40 (cf. Figure 17) each forming first actuation elements 19 of the actuator 7 to be employed for tuning/deforming the liquid 5. As visible in Figure 18, respective second actuation elements 20 are formed by uniform electrodes 40, each deposited on a membrane 10 sealing of a respective compartment 38, in which the respective liquid volume 27 of the respective liquid 5 is contained.

In the situation depicted in Figure 18, the actuation means 32 is employed for forming an actuator 7 with the membrane 10b sealing the second liquid volume 27b and thus deforming the liquid volume 27b; the first liquid volume 27a has already been frozen into a permanent profile 13 / FFOS 3 by solidifying the liquid 5 into a solidified optical layer 9, while the third membrane 10c is in a non-tuned rest state, and still awaiting tuning by the actuation means 32. In other words, the setup 1 formed by the actuation substrate 33 and the carrier substrate 24 offers at least one actuator 7 for deforming multiple liquid volumes 27 into respective liquid shapes 6, with each liquid shape 6 defining a specific FFOS 3 after solidifying the liquid 5 (after freezing the shape 6).

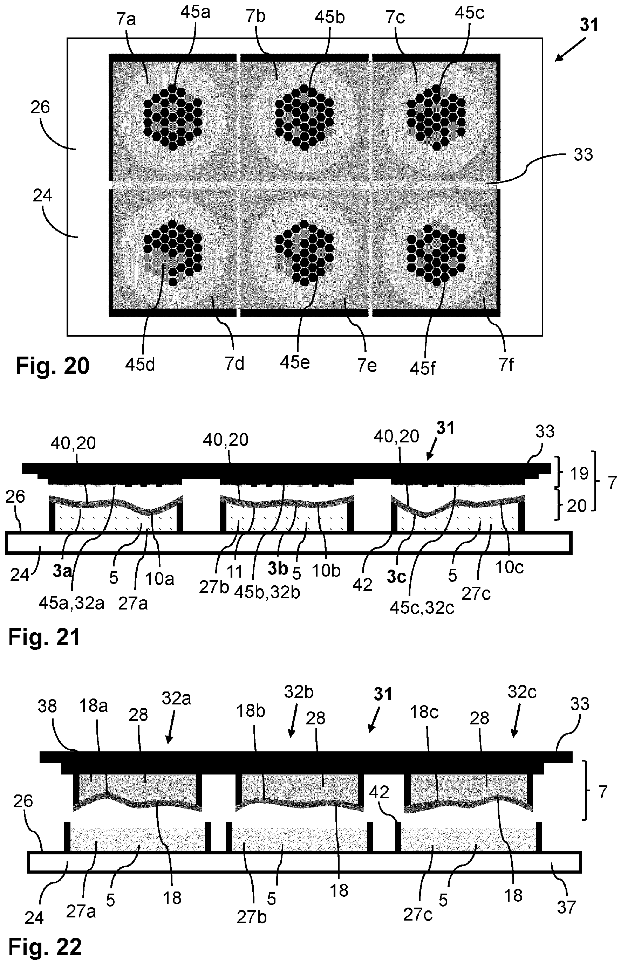

In both examples of Figures 18 and 19, the respective first actuation elements 19 are designed and configured for deforming the respective membrane 10 or 18. Also, during solidification of the liquid 5, the respective membrane 10 or 18 is in contact with the liquid 5 via an respective interface 11. In the case of Figure 19 (and also of Figure 22), the interface will be formed as soon as the actuation membrane 18 is brought into touch with the liquid 5.

In the case of Figure 18 (and also Figure 21 - cf. below), the carrier substrate 24 carries a multitude of second actuation elements 20 in the form of respective (deformable) electrodes 40, each deposited on the respective membrane 10. These elements 20 are in each case intended for interaction with the at least one first actuation elements 19 on the actuation substrate 33. Evidently, it would also be possible to place a respective electrode array 45 as a second actuation element 20 onto the carrier surface 26 at each location of a liquid volume 27a, 27b, 27c. In this case, it would be sufficient to place a single counter electrode 40 on the respective membrane 10 (which could also be attached to the actuation substrate 33) as a first actuation element 19, because this approach would also allow to form a fully functional actuator 7 from the first and second actuation elements 19, 20.

In all Figures 18, 19, 21 and 22, the at least one first actuation element 19 and the at least one second actuation element 20 thus form an actuator 7 for deforming the liquid profiles 6, and control electronics 35 of the setup 31 is used for driving the elements 19, 20. When taking away the carrier substrate 24, only in the examples of the setups 31 according to Figure 19 and 22, there remains a fully functional actuator 7, whereas in the example of Figure 18, the actuator 7 would no longer be complete/functional.

Figures 20 to 22 present an alternative approach for parallel / simultaneous fabrication of FFOS 3 with high through-put. In this case, the setup 31 comprises a multitude of individually addressable actuation means 32, which may be separate (most preferably electrofluidic) actuators 7 as shown in Figure 22 or for example a multitude of electrode arrays 45, in particular arranged on a common actuation substrate 33, as in the case of Figure 21. Using such approaches, the individual liquid volumes 27 (which may be formed from identical or different solidifiable liquids 5) can be tuned simultaneously in one tuning-step, as shown in Figure 21 and 22, and the individual liquid profiles 6 can thus be solidified at the same time, e.g. by parallel flood-UV-exposure.

As each actuation means 32 can be individually controlled for tuning a respective ones of the various liquid profiles 6 formed on the common carrier substrate 24, each actuation means 32, in particular each actuators 7 in the case of the Figure 22, may define a respective FFOS 3a, 3b, 3c, which can be of different shapes, depending on the individual tuning, as illustrated in Figure 21 (in Figure 22, the tuning / stamping has not yet occurred).

In summary, a novel process for rapid and accurate fabrication of static, i.e. non-tunable, freeform optical surfaces (FFOS) 3 is proposed and a number of optical components 1 are presented, which can be formed with the concept. To achieve large freedom of design, high shape fidelity and low fabrication cost, it is proposed to solidify a liquid 5 into a permanent optical layer 9 defining a desired FFOS 3, which may be either transmissive or reflective, after bringing the liquid 5 into a suitable liquid shape 6. This shaping is performed with an actuator 7, which, in some applications, may be integrated into the component 1 containing the solidifiable liquid 5. Hence it is proposed to tune the liquid layer 9 of the component 1 into the desired freeform using the actuator 7 and then to freeze the obtained shape 6 by solidifying the liquid 5.

### List of reference numerals

- 1: optical component
- 2: freeform optical phase plate (FFOPP)
- 3: freeform optical surface (FFOS of 1 or 2)
- 4: optical phase-shift (introduced by 3)
- 5: solidifiable liquid
- 6: liquid shape (of 5)
- 7: actuator
- 8: (local) actuation force (exerted by 7)
- 9: optical layer (formed from 5)
- 10: membrane (in particular as part of 7)
- 11: interface (between 10 and 5)
- 12: actuation elements (of 7)
- 13: (surface) profile (of 3 after freeze of 5)
- 14: optical assembly (comprising 1)
- 15: reflective coating (thus forming a reflective FFOS)
- 16: outer surface (of 10 or 15)
- 17: optical assembly
- 18: actuation membrane (as part of 7 and in particular separate from 10)
- 19: 1^{st} actuation element
- 20: 2^{nd} actuation element
- 21: tuning area (of 18)
- 22: peripheral area (of 18)
- 23: compensation actuation element
- 24: carrier substrate
- 25: carrier body
- 26: carrier surface
- 27: liquid volume (of 5)
- 28: passive liquid
- 29: contact pad
- 30: optical aperture
- 31: fabrication setup
- 32: actuation means
- 33: actuation substrate
- 34: MEMS-actuator
- 35: control electronics
- 36: mean plane (reference for 13)
- 37: glass blank
- 38: liquid compartment
- 39: spherical surface
- 40: electrode
- 41: solidified liquid
- 42: confinement structure
- 43: micro-piezo-actuator
- 44: piezo-active membrane
- 45: electrode array
- 46: wavefront sensor
- 47: beam splitter
- 48: light (for optical metrology)
- 49: optical liquid
- 50: fluidic ports
- 51: opaque layer
- 52: (optical) lens
- 53: metrology means

## Claims

1. **Process for fabricating an optical component (1), for** example a freeform optical phase plate (2),
- featuring a non-tunable freeform optical surface (3) which introduces a constant optical phase-shift ϕ(ρ,θ)(4), comprising that
- a volume of a solidifiable liquid (5), deposited on a carrier surface (26) provided by a carrier substrate (24) or by a carrier body (25) of the optical component (1) to be fabricated, is deformed into a liquid shape (6) defining the freeform optical surface (3) by an actuator (7) exerting actuation forces (8) on the liquid (5),
- the actuator (7) featuring multiple actuation elements (12) which can be driven individually to deform the liquid shape (6) locally and which are each designed to exert a local actuation force (8) on the liquid (5) within an optical aperture (30) of the optical component (1) that is relevant to the desired optical phase-shift ϕ(ρ,θ)(4),
- wherein the actuation elements (12, 20, 40) cover an optical area of the optical component (1) defining said optical aperture (30) and the local actuation forces exerted by the actuator (7) are thus distributed over said optical area;
- the liquid (5) is solidified
- to form a non-tunable optical layer (9) of the component (1) and
- to transfer the freeform optical surface (3) into a permanent shape profile,
- such that the optical layer (9) is formed on the carrier surface and
- the actuator (7) is reconfigurable such that the actuator (7) can be tuned to define various different freeform optical surfaces.

2. Process according to claim 1, wherein the actuator (7) exerts the actuation forces (8) via a membrane (10, 18, 18a, 18b, 18c) forming an interface (11) with the liquid (5)
and
- the membrane (10) is a tunable membrane (10) that remains in the component (1) after transferring the membrane (10) into a certain shape by solidifying the liquid (5)
or
- the membrane (10) is an actuation membrane (18), which is part of a separate actuator (7) but not part of the fabricated component (1).

3. Process for fabrication of non-tunable freeform optical surfaces (3) of various profiles z(x,y) according to claim 1 or claim 2, the process employing
- a multitude of carrier surfaces (26), and
- at least one actuator (7) configured to deform liquid volumes (27) into various liquid shapes (6), wherein,
- a respective liquid volume (27) of a solidifiable liquid (5) is dispensed on each of the multiple carrier surfaces (26), respectively;
- each liquid volume (27) is deformed, in particular
- consecutively, using the at least one actuator (7) or
- in parallel using a multitude of actuators (7), to define a respective freeform optical surface (3a, 3b, 3c, 3d); and
- the liquid volumes (27) are each solidified.

4. Process according to any of the preceding claims,
- wherein a profile z(x,y) of the liquid shape (6) is live-monitored during the deformation, in particular
- by computing at least one optical figure of merit parameterizing the freeform optical surface (3)
and/or
- by optically measuring a profile z(x,y) of the liquid (5), in particular through analysis of a wavefront transmitted through or reflected by the freeform optical surface (3) and/or
- by, preferably optically, measuring the shape profile Q(x,y) of an actuation membrane (18) employed to deform the liquid (5) into the liquid shape (6) of profile z(x,y),
- and wherein the liquid shape (6) is then fine-tuned using the actuator (7) based on the live-monitoring, in particular measured data,
- most preferably, wherein
- said live-monitoring is continued while solidifying the liquid (5) and/or
- the fine-tuning is adapted during solidification of the liquid (5) based on the continued live-monitoring.

5. Process according to any of the preceding claims,
- wherein the actuator (7) is tuned to cause a deformation of the liquid shape (6) that compensates at least part of a modeled secondary shape deformation effect occurring in the liquid (5) during or even after solidification, and/or
- wherein the optical component (1) features at least two non-tunable freeform optical surfaces (3a, 3b) and
- wherein the process is used to define the at least two non-tunable freeform optical surfaces (3a, 3b) consecutively or in parallel.

6. Process according to any of the claims 2 to 5,
- wherein the membrane (10) is
- an actively tunable membrane (10) or
- a passively deformable membrane (10),
and/or
- wherein the membrane (10) is part of the component (1) and forms the permanent shape profile of the freeform optical surface (3)
or
- wherein the membrane (10) is removed after solidifying the liquid (5), in particular such that the optical layer (9) forms the permanent shape profile of the freeform optical surface (3) of the component (1).

7. Process according to any of the preceding claims,
- wherein the actuator (7) comprises a passive liquid (28), in particular different from the solidifiable liquid (5) of the component (1),
- in particular wherein the passive liquid (28) forms an interface (11) with an actuation membrane (18) of the actuator (7),
- most preferably wherein the actuator (7) offers push-pull actuation of the actuation membrane (18) based on hydro-mechanical coupling delivered by the passive liquid (28) .

8. Process according to any of the preceding claims,
- wherein a reflective coating (15) is added on the permanent shape profile of the freeform optical surface (3) to render the freeform optical surface (3) reflective,
- in particular wherein the solidified liquid (41) is transparent,
- in particular such that during use of the component (1), light can be reflected on an internal interface (11) between the optical layer (9) and the coating (15).

9. Process according to any of the preceding claims, wherein the actuation elements (12, 20, 40) cover a central portion of said optical area defining said optical aperture (30).

10. **Fabrication setup (31)** for fabricating non-tunable freeform optical surfaces (3) of various profiles z(x,y) by deforming a solidifiable liquid (5) into various liquid shapes (6) defining the freeform optical surface (3), which introduces a constant optical phase-shift ϕ(ρ,θ)(4), the setup (31) comprising:
- actuation means (32) for tuning the various liquid shapes (6), which form a complete actuator (7) being reconfigurable such that the actuator (7) can be tuned to define various different freeform optical surfaces;
- control electronics (35) for driving said actuation means (32); and
- at least one carrier surface (23) designed to carry a non-tunable optical layer (9) formed by the solidifiable liquid (5), with the carrier surface (23) later forming part of a fabricated optical component (1),
- wherein the actuator (7) features multiple actuation elements (12) which can be driven individually to deform the liquid shape (6) locally and which are each designed to exert a local actuation force (8) on the liquid (5) within an optical aperture (30) of said fabricated optical component (1) that is relevant to a desired optical phase-shift ϕ(ρ,θ)(4) **characterized in that**
the actuation elements (12, 20, 40) are arranged such that they cover an optical area of the optical component (1) to be fabricated defining said optical aperture (30) and such that the local actuation forces exerted by the actuator (7) are thus distributed over said optical area;

11. Fabrication setup (31) according to the preceding claim,
- wherein the setup (31) comprises, preferably optical, metrology means (53) which are configured to monitor a profile z(x,y) of the particular liquid shape (6) and/or
- wherein the actuator (7) exerts the actuation forces (8) on the liquid (5) via a membrane (18, 18a, 18b, 18c) forming an interface (11) with the liquid (5).

12. Fabrication setup (31) according to claim 10 or 11,
wherein the setup (31) further comprises
- an actuation substrate (33) carrying at least one first actuation element (19),
- in particular a multitude of first actuation elements (19),
for deforming a membrane (10) configured to form an interface (11) with the liquid (5) during solidification of the liquid (5),
- and preferably a carrier substrate (24) carrying at least one corresponding second actuation element (20),
- in particular a multitude of second actuation elements (20),
for interaction with the at least one first actuation element (19) and for deforming the membrane (10),
- in particular such that the at least one first actuation element (19) and the at least one second actuation element (20) form the actuator (7) for deforming the liquid (5) into a liquid shape (6) defining a specific freeform optical surface (3) and/or
- wherein the control electronics (35) are configured for driving said first and second actuation elements (19,20) / said actuator (7).

13. Fabrication setup (31) according to any one of the claims 10 to 12, wherein the actuation means (32) comprise at least one actuator (7) configured to tune a separate actuation membrane (18),
- in particular wherein the separate actuation membrane (18) is configured to be in contact with the liquid (5) during solidification of the liquid (5) to define the various liquid shapes (6) and resulting freeform optical surfaces (3), and/or
- wherein the control electronics (35) are configured for tuning said separate actuation membrane (18) into various profiles Q(x,y).

14. **Use of an actuator (7)**
- for tuning a liquid shape (6) of a solidifiable liquid (5) that forms an optical layer (9) of an optical component (1) to be fabricated with the actuator (7) and which, after solidification, defines a non-tunable freeform optical surface (3) which introduces a constant optical phase-shift ϕ(ρ,θ)(4), comprising that,
- the actuator (7) is reconfigurable and is tuned to define various different freeform optical surfaces formed by the solidifiable liquid (5) already deposited on a carrier surface (23), and
- the actuator (7) features multiple actuation elements (12) which are driven individually to deform the liquid shape (6) locally and which are each designed to exert a local actuation force (8) on the liquid (5) within an optical aperture (30) of the optical component (1) that is relevant to the desired optical phase-shift ϕ(ρ,θ)(4),
- wherein the actuation elements (12, 20, 40) cover an optical area of the optical component (1) defining said optical aperture (30) and the local actuation forces exerted by the actuator (7) are thus distributed over said optical area;
- preferably wherein the actuator (7) exerts the actuation forces (8) on the liquid (5) via a membrane (10, 18, 18a, 18b, 18c) forming an interface (11) with the liquid (5).

15. Use of an actuator (7) according to the preceding claim,
- wherein
- at least part of the actuator (7), for example second actuation elements (20) of the actuator (7), or
- the complete actuator (7)
forms a part of the completed component (1) and/or
- wherein the actuator (7) comprises a passive liquid (28) that allows push-pull actuation of a separate actuation membrane (18),
- preferably by employing at least one compensation actuation element (23), arranged outside of a tuning area (21) of the actuation membrane (18) used to define the freeform optical surface (3),
- most preferably by using a multitude of compensation actuation elements (23) distributed in a peripheral area (22) that surrounds said tuning area (21).

## Patentansprüche

1. **Verfahren zum Herstellen einer optischen Komponente (1),** beispielsweise einer optischen Freiformphasenplatte (2),
- die eine nicht abstimmbare optische Freiformfläche (3) aufweist, die eine konstante optische Phasenverschiebung ϕ(ρ,θ) (4) einleitet, umfassend, dass:
- ein Volumen einer verfestigbaren Flüssigkeit (5), die auf einer Trägerfläche (26) aufgebracht ist, die durch ein Trägersubstrat (24) oder durch einen Trägerkörper (25) der herzustellenden optischen Komponente (1) bereitgestellt wird, zu einer Flüssigkeitsform (6) verformt wird, welche die optische Freiformfläche (3) durch einen Auslöser (7) definiert, der Auslösungskräfte (8) auf die Flüssigkeit (5) ausübt,
- der Auslöser (7) mehrere Auslösungselemente (12) aufweist, die individuell angetrieben werden können, um die Flüssigkeitsform (6) lokal zu verformen, und die jeweils dazu ausgestaltet sind, eine lokale Auslösungskraft (8) innerhalb einer optischen Öffnung (30) der optischen Komponente (1), die für die erwünschte optische Phasenverschiebung ϕ(ρ,θ) (4) relevant ist, auf die Flüssigkeit (5) auszuüben,
- wobei die Auslösungselemente (12, 20, 40) einen optischen Bereich der optischen Komponente (1) bedecken, der die optische Öffnung (30) definiert, und die lokalen Auslösungskräfte, die durch den Auslöser (7) ausgeübt werden, somit über den optischen Bereich verteilt werden,
- die Flüssigkeit (5) dazu verfestigt wird,
- eine nicht abstimmbare optische Schicht (9) der Komponente (1) zu bilden und
- die optische Freiformfläche (3) in ein Dauerformprofil zu übertragen,
- derart, dass die optische Schicht (9) auf der Trägerfläche gebildet wird, und
- der Auslöser (7) derart neukonfigurierbar ist, dass der Auslöser (7) dazu abgestimmt werden kann, verschiedene unterschiedliche optische Freiformflächen zu definieren.

2. Verfahren nach Anspruch 1, wobei der Auslöser (7) die Auslösungskräfte (8) über eine Membran (10, 18, 18a, 18b, 18c) ausübt, die eine Schnittstelle (11) mit der Flüssigkeit (5) bildet,
und
- die Membran (10) eine abstimmbare Membran (10) ist, die nach Übertragen der Membran (10) in eine bestimmte Form durch Verfestigen der Flüssigkeit (5) in der Komponente (1) zurückbleibt
oder
- die Membran (10) eine Auslösungsmembran (18) ist, die Teil eines separaten Auslösers (7), jedoch nicht Teil der hergestellten Komponente (1) ist.

3. Verfahren zur Herstellung von nicht abstimmbaren optischen Freiformflächen (3) verschiedener Profile z(x,y) nach Anspruch 1 oder Anspruch 2, wobei das Verfahren Folgendes einsetzt:
- eine Vielheit von Trägerflächen (26) und
- mindestens einen Auslöser (7), der dazu konfiguriert ist, Flüssigkeitsvolumina (27) zu verschiedenen Flüssigkeitsformen (6) zu verformen, wobei
- ein jeweiliges Flüssigkeitsvolumen (27) einer verfestigbaren Flüssigkeit (5) jeweils auf jeder der mehreren Trägerflächen (26) abgegeben wird,
- jedes Flüssigkeitsvolumen (27) insbesondere wie folgt verformt wird:
- nacheinander unter Verwendung des mindestens einen Auslösers (7)
oder
- parallel unter Verwendung einer Vielheit von Auslösern (7), um eine jeweilige optische Freiformfläche (3a, 3b, 3c, 3d) zu definieren; und
- die Flüssigkeitsvolumina (27) jeweils verfestigt werden.

4. Verfahren nach einem der vorhergehenden Ansprüche,
- wobei ein Profil z(x,y) der Flüssigkeitsform (6) während der Verformung insbesondere wie folgt live überwacht wird:
- durch Berechnen mindestens einer optischen Gütezahl, welche die optische Freiformfläche (3) parametrisiert,
und/oder
- durch optisches Messen eines Profils z(x,y) der Flüssigkeit (5), insbesondere durch Analyse einer Wellenfront, die durch die optische Freiformfläche (3) übermittelt oder widergespiegelt wird, und/oder
- durch bevorzugt optisches Messen des Formprofils Q(x,y) einer Auslösungsmembran (18), die dazu eingesetzt wird, die Flüssigkeit (5) zu der Flüssigkeitsform (6) des Profils z(x,y) zu verformen,
- und wobei die Flüssigkeitsform (6) daraufhin unter Verwendung des Auslösers (7) basierend auf der Liveüberwachung, insbesondere gemessenen Daten, feineingestellt wird,
- wobei am bevorzugtesten
- die Liveüberwachung während Verfestigens der Flüssigkeit (5) fortgesetzt wird und/oder
- das Feineinstellen während Verfestigung der Flüssigkeit (5) basierend auf der fortgesetzten Liveüberwachung angepasst wird.

5. Verfahren nach einem der vorhergehenden Ansprüche,
- wobei der Auslöser (7) dazu abgestimmt ist, eine Verformung der Flüssigkeitsform (6) zu veranlassen, die mindestens einen Teil eines modellierten sekundären Formverformungseffekts, der während oder sogar nach Verfestigung in der Flüssigkeit (5) auftritt, ausgleicht,
und/oder
- wobei die optische Komponente (1) mindestens zwei nicht abstimmbare optische Freiformflächen (3a, 3b) aufweist und
- wobei das Verfahren dazu verwendet wird, die mindestens zwei nicht abstimmbaren optischen Freiformflächen (3a, 3b) nacheinander oder parallel zu definieren.

6. Verfahren nach einem der Ansprüche 2 bis 5,
- wobei die Membran (10) Folgendes ist:
- eine aktiv abstimmbare Membran (10) oder
- eine passiv verformbare Membran (10),
und/oder
- wobei die Membran (10) Teil der Komponente (1) ist und das Dauerformprofil der optischen Freiformfläche (3) bildet
oder
- wobei die Membran (10) nach Verfestigen der Flüssigkeit (5) insbesondere derart entfernt wird, dass die optische Schicht (9) das Dauerformprofil der optischen Freiformfläche (3) der Komponente (1) bildet.

7. Verfahren nach einem der vorhergehenden Ansprüche,
- wobei der Auslöser (7) eine passive Flüssigkeit (28) umfasst, die sich insbesondere von der verfestigbaren Flüssigkeit (5) der Komponente (1) unterscheidet,
- wobei insbesondere die passive Flüssigkeit (28) eine Schnittstelle (11) mit einer Auslösungsmembran (18) des Auslösers (7) bildet,
- wobei am bevorzugtesten der Auslöser (7) eine Druck-Zug-Auslösung der Auslösungsmembran (18) basierend auf hydromechanischer Kopplung, die durch die passive Flüssigkeit (28) bereitgestellt wird, verschafft.

8. Verfahren nach einem der vorhergehenden Ansprüche,
- wobei eine widerspiegelnde Beschichtung (15) auf dem Dauerformprofil der optischen Freiformfläche (3) hinzugefügt wird, um die optische Freiformfläche (3) widerspiegelnd zu machen,
- wobei insbesondere die verfestigte Flüssigkeit (41) transparent ist,
- insbesondere derart, dass Licht während Verwendung der Komponente (1) auf einer internen Schnittstelle (11) zwischen der optischen Schicht (9) und der Beschichtung (15) widergespiegelt werden kann.

9. Verfahren nach einem der vorhergehenden Ansprüche, wobei die Auslösungselemente (12, 20, 40) einen mittigen Abschnitt des optischen Bereichs bedecken, der die optische Öffnung (30) definiert.

10. **Herstellungseinrichtung (31)** zum Herstellen von nicht abstimmbaren optischen Freiformflächen (3) verschiedener Profile z(x,y) durch Verformen einer verfestigbaren Flüssigkeit (5) zu verschiedenen Flüssigkeitsformen (6), welche die optische Freiformfläche (3) definieren, die eine konstante optische Phasenverschiebung ϕ(ρ,θ) (4) einleitet, wobei die Einrichtung (31) Folgendes umfasst:
- Auslösungsmittel (32) zum Abstimmen der verschiedenen Flüssigkeitsformen (6), die einen vollständigen Auslöser (7) bilden, der derart neukonfigurierbar ist, dass der Auslöser (7) dazu abgestimmt werden kann, verschiedene unterschiedliche optische Freiformflächen zu definieren,
- eine Steuerelektronik (35) zum Antreiben der Auslösungsmittel (32); und
- mindestens eine Trägerfläche (23), die dazu ausgestaltet ist, eine nicht abstimmbare optische Schicht (9) zu tragen, die durch die verfestigbare Flüssigkeit (5) gebildet wird, wobei die Trägerfläche (23) später Teil einer hergestellten optischen Komponente (1) ist,
- wobei der Auslöser (7) mehrere Auslösungselemente (12) aufweist, die individuell angetrieben werden können, um die Flüssigkeitsform (6) lokal zu verformen, und die jeweils dazu ausgestaltet sind, eine lokale Auslösungskraft (8) innerhalb einer optischen Öffnung (30) der hergestellten optischen Komponente (1), die für eine erwünschte optische Phasenverschiebung ϕ(ρ,θ) (4) relevant ist, auf die Flüssigkeit (5) auszuüben, **dadurch gekennzeichnet, dass**
die Auslösungselemente (12, 20, 40) derart, dass sie einen optischen Bereich der herzustellenden optischen Komponente (1) bedecken, der die optische Öffnung (30) definiert, und derart, dass die lokalen Auslösungskräfte, die durch den Auslöser (7) ausgeübt werden, somit über den optischen Bereich verteilt werden, angeordnet sind.

11. Herstellungseinrichtung (31) nach dem vorhergehenden Anspruch,
- wobei die Einrichtung (31) bevorzugt optische Metrologiemittel (53) umfasst, die dazu konfiguriert sind, ein Profil z(x,y) der bestimmten Flüssigkeitsform (6) zu überwachen, und/oder
- wobei der Auslöser (7) die Auslösungskräfte (8) über eine Membran (18, 18a, 18b, 18c), die eine Schnittstelle (11) mit der Flüssigkeit (5) bildet, auf die Flüssigkeit (5) ausübt.

12. Herstellungseinrichtung (31) nach Anspruch 10 oder 11,
wobei die Einrichtung (31) ferner Folgendes umfasst:
- ein Auslösungssubstrat (33), das mindestens ein erstes Auslösungselement (19) trägt,
- insbesondere eine Vielheit erster Auslösungselemente (19),
zum Verformen einer Membran (10), die dazu konfiguriert ist, während Verfestigung der Flüssigkeit (5) eine Schnittstelle (11) mit der Flüssigkeit (5) zu bilden,
- und bevorzugt ein Trägersubstrat (24), das mindestens ein entsprechendes zweites Auslösungselement (20) trägt,
- insbesondere eine Vielheit zweiter Auslösungselemente (20),
zur Interaktion mit dem mindestens einen ersten Auslösungselement (19) und zum Verformen der Membran (10),
- insbesondere derart, dass das mindestens eine erste Auslösungselement (19) und das mindestens eine zweite Auslösungselement (20) den Auslöser (7) zum Verformen der Flüssigkeit (5) zu einer Flüssigkeitsform (6), die eine spezifische optische Freiformfläche (3) definiert, bilden, und/oder
- wobei die Steuerelektronik (35) zum Antreiben des ersten und des zweiten Auslösungselements (19, 20) / des Auslösers (7) konfiguriert ist.

13. Herstellungseinrichtung (31) mach einem der Ansprüche 10 bis 12, wobei die Auslösungsmittel (32) mindestens einen Auslöser (7) umfassen, der dazu konfiguriert ist, eine separate Auslösungsmembran (18) abzustimmen,
- wobei insbesondere die separate Auslösungsmembran (18) dazu konfiguriert ist, während Verfestigung der Flüssigkeit (5) mit der Flüssigkeit (5) in Kontakt zu stehen, um die verschiedenen Flüssigkeitsformen (6) und die daraus hervorgehenden optischen Freiformflächen (3) zu definieren, und/oder
- wobei die Steuerelektronik (35) dazu konfiguriert ist, die separate Auslösungsmembran (18) auf verschiedene Profile Q(x,y) abzustimmen.

14. **Verwendung eines Auslösers (7)**
- zum Abstimmen einer Flüssigkeitsform (6) einer verfestigbaren Flüssigkeit (5), die eine optische Schicht (9) einer optischen Komponente (1) bildet, die mit dem Auslöser (7) herzustellen ist, und die nach Verfestigung eine nicht abstimmbare optische Freiformfläche (3) definiert, die eine konstante optische Phasenverschiebung ϕ(ρ,θ) (4) einleitet, umfassend, dass
- der Auslöser (7) neukonfigurierbar ist und dazu abgestimmt ist, verschiedene unterschiedliche optische Freiformflächen zu definieren, die durch die verfestigbare Flüssigkeit (5) gebildet werden, die bereits auf einer Trägerfläche (23) aufgebracht ist, und
- der Auslöser (7) mehrere Auslösungselemente (12) aufweist, die individuell angetrieben werden, um die Flüssigkeitsform (6) lokal zu verformen, und die jeweils dazu ausgestaltet sind, eine lokale Auslösungskraft (8) innerhalb einer optischen Öffnung (30) der optischen Komponente (1), die für die erwünschte optische Phasenverschiebung ϕ(ρ,θ) (4) relevant ist, auf die Flüssigkeit (5) auszuüben,
- wobei die Auslösungselemente (12, 20, 40) einen optischen Bereich der optischen Komponente (1) bedecken, der die optische Öffnung (30) definiert, und die lokalen Auslösungskräfte, die durch den Auslöser (7) ausgeübt werden, somit über den optischen Bereich verteilt werden;
- wobei bevorzugt der Auslöser (7) die Auslösungskräfte (8) über eine Membran (10, 18, 18a, 18b, 18c), die eine Schnittstelle (11) mit der Flüssigkeit (5) bildet, auf die Flüssigkeit (5) ausübt.

15. Verwendung eines Auslösers (7) nach dem vorhergehenden Anspruch,
- wobei
- mindestens ein Teil des Auslösers (7), beispielsweise zweite Auslösungselemente (20) des Auslösers (7),
oder
- der vollständige Auslöser (7)
einen Teil der vervollständigten Komponente (1) bildet und/oder
- wobei der Auslöser (7) eine passive Flüssigkeit (28) umfasst, die eine Druck-Zug-Auslösung einer separaten Auslösungsmembran (18) ermöglicht,
- bevorzugt durch Einsetzen mindestens eines Ausgleichsauslösungselements (23), das außerhalb eines Abstimmungsbereichs (21) der Auslösungsmembran (18), der dazu verwendet wird, die optische Freiformfläche (3) zu definieren, angeordnet ist,
- am bevorzugtesten unter Verwendung einer Vielheit von Ausgleichsauslösungselementen (23), die in einem Randbereich (22) verteilt sind, der den Abstimmungsbereich (21) umgibt.

## Revendications

1. Procédé de fabrication d'un composant optique (1), par exemple une plaque de phase optique de forme libre (2),
- présentant une surface optique de forme libre non accordable (3) qui introduit un déphasage optique ϕ(ρ,θ) (4) constant, comprenant le fait que
- un volume d'un liquide pouvant être solidifié (5), déposé sur une surface porteuse (26) fournie par un substrat porteur (24) ou par un corps porteur (25) du composant optique (1) à fabriquer, est déformé en une forme de liquide (6) définissant la surface optique de forme libre (3) par un actionneur (7) exerçant des forces d'actionnement (8) sur le liquide (5),
- l'actionneur (7) présentant de multiples éléments d'actionnement (12) qui peuvent être pilotés individuellement pour déformer la forme de liquide (6) localement et qui sont chacun conçus pour exercer une force d'actionnement locale (8) sur le liquide (5) au sein d'une ouverture optique (30) du composant optique (1) qui est pertinente pour le déphasage optique ϕ(ρ,θ) (4) souhaité,
- dans lequel les éléments d'actionnement (12, 20, 40) recouvrent une zone optique du composant optique (1) définissant ladite ouverture optique (30) et les forces d'actionnement locales exercées par l'actionneur (7) sont ainsi réparties sur ladite zone optique ;
- le liquide (5) est solidifié
- pour former une couche optique non accordable (9) du composant (1) et
- pour transformer la surface optique de forme libre (3) en un profil de forme permanent,
- de telle sorte que la couche optique (9) est formée sur la surface porteuse et
- l'actionneur (7) est reconfigurable de telle sorte que l'actionneur (7) peut être accordé pour définir diverses surfaces optiques de forme libre différentes.

2. Procédé selon la revendication 1, dans lequel l'actionneur (7) exerce les forces d'actionnement (8) par l'intermédiaire d'une membrane (10, 18, 18a, 18b, 18c) formant une interface (11) avec le liquide (5)
et
- la membrane (10) est une membrane accordable (10) qui reste dans le composant (1) après transformation de la membrane (10) en une certaine forme en solidifiant le liquide (5)
ou
- la membrane (10) est une membrane d'actionnement (18) qui fait partie d'un actionneur (7) séparé mais pas du composant (1) fabriqué.

3. Procédé de fabrication de surfaces optiques de forme libre non accordables (3) de divers profils z(x,y) selon la revendication 1 ou la revendication 2, le procédé employant
- une multitude de surfaces porteuses (26), et
- au moins un actionneur (7) configuré pour déformer des volumes de liquide (27) en diverses formes de liquide (6), dans lequel,
- un volume de liquide (27) respectif d'un liquide pouvant être solidifié (5) est distribué sur chacune des multiples surfaces porteuses (26), respectivement ;
- chaque volume de liquide (27) est déformé, en particulier
- consécutivement, en utilisant l'au moins un actionneur (7) ou
- en parallèle en utilisant une multitude d'actionneurs (7), pour définir une surface optique de forme libre (3a, 3b, 3c, 3d) respective ; et
- les volumes de liquide (27) sont chacun solidifiés.

4. Procédé selon l'une quelconque des revendications précédentes,
- dans lequel un profil z(x,y) de la forme de liquide (6) est surveillé en direct au cours de la déformation, en particulier
- en calculant au moins un facteur de mérite optique paramétrant la surface optique de forme libre (3) et/ou
- en mesurant optiquement un profil z(x,y) du liquide (5), en particulier par l'analyse d'un front d'onde transmis à travers ou réfléchi par la surface optique de forme libre (3) et/ou
- en mesurant, de préférence optiquement, le profil de forme Q(x,y) d'une membrane d'actionnement (18) employée pour déformer le liquide (5) en la forme de liquide (6) du profil z(x,y),
- et dans lequel la forme de liquide (6) est ensuite accordée de manière précise à l'aide de l'actionneur (7) sur la base de la surveillance en direct, en particulier de données mesurées,
- plus préférentiellement, dans lequel
- ladite surveillance en direct est poursuivie tout en solidifiant le liquide (5) et/ou
- l'accord précis est adapté pendant la solidification du liquide (5) sur la base de la surveillance en direct continue.

5. Procédé selon l'une quelconque des revendications précédentes,
- dans lequel l'actionneur (7) est accordé pour provoquer une déformation de la forme de liquide (6) qui compense au moins une partie d'un effet de déformation de forme secondaire modélisé se produisant dans le liquide (5) pendant ou même après la solidification, et/ou
- dans lequel le composant optique (1) présente au moins deux surfaces optiques de forme libre non accordables (3a, 3b) et
- le procédé étant utilisé pour définir les au moins deux surfaces optiques de forme libre non accordables (3a, 3b) consécutivement ou en parallèle.

6. Procédé selon l'une quelconque des revendications 2 à 5,
- dans lequel la membrane (10) est
- une membrane (10) activement accordable ou
- une membrane (10) passivement déformable, et/ou
- dans lequel la membrane (10) fait partie du composant (1) et forme le profil de forme permanent de la surface optique de forme libre (3),
ou
- dans lequel la membrane (10) est retirée après solidification du liquide (5), en particulier de telle sorte que la couche optique (9) forme le profil de forme permanent de la surface optique de forme libre (3) du composant (1).

7. Procédé selon l'une quelconque des revendications précédentes,
- dans lequel l'actionneur (7) comprend un liquide passif (28), en particulier différent du liquide pouvant être solidifié (5) du composant (1),
- en particulier dans lequel le liquide passif (28) forme une interface (11) avec une membrane d'actionnement (18) de l'actionneur (7),
- plus préférentiellement dans lequel l'actionneur (7) offre un actionnement symétrique de la membrane d'actionnement (18) sur la base d'un couplage hydromécanique délivré par le liquide passif (28).

8. Procédé selon l'une quelconque des revendications précédentes,
- dans lequel un revêtement réfléchissant (15) est ajouté sur le profil de forme permanent de la surface optique de forme libre (3) pour rendre la surface optique de forme libre (3) réfléchissante,
- en particulier dans lequel le liquide solidifié (41) est transparent,
- en particulier de telle sorte que lors de l'utilisation du composant (1), une lumière peut être réfléchie sur une interface (11) interne entre la couche optique (9) et le revêtement (15).

9. Procédé selon l'une quelconque des revendications précédentes, dans lequel les éléments d'actionnement (12, 20, 40) recouvrent une portion centrale de ladite zone optique définissant ladite ouverture optique (30).

10. Installation de fabrication (31) pour fabriquer des surfaces optiques de forme libre non accordables (3) de divers profils z(x,y) en déformant un liquide pouvant être solidifié (5) en diverses formes de liquide (6) définissant la surface optique de forme libre (3), qui introduit un déphasage optique ϕ(ρ,θ) (4) constant, l'installation (31) comprenant :
- des moyens d'actionnement (32) pour accorder les diverses formes de liquide (6), qui forment un actionneur (7) complet reconfigurable de telle sorte que l'actionneur (7) peut être accordé pour définir diverses surfaces optiques de forme libre différentes ;
- une électronique de commande (35) pour piloter lesdits moyens d'actionnement (32) ; et
- au moins une surface porteuse (23) conçue pour porter une couche optique non accordable (9) formée par le liquide pouvant être solidifié (5), la surface porteuse (23) faisant ultérieurement partie d'un composant optique (1) fabriqué,
- dans laquelle l'actionneur (7) présente de multiples éléments d'actionnement (12) qui peuvent être pilotés individuellement pour déformer localement la forme de liquide (6) et qui sont chacun conçus pour exercer une force d'actionnement locale (8) sur le liquide (5) au sein d'une ouverture optique (30) dudit composant optique (1) fabriqué qui est pertinente pour un déphasage optique ϕ(ρ,θ) (4) souhaité, **caractérisée en ce que**
les éléments d'actionnement (12, 20, 40) sont agencés de telle sorte qu'ils recouvrent une zone optique du composant optique (1) à fabriquer définissant ladite ouverture optique (30) et de telle sorte que les forces d'actionnement locales exercées par l'actionneur (7) sont ainsi réparties sur ladite zone optique ;

11. Installation de fabrication (31) selon la revendication précédente,
- l'installation (31) comprenant des moyens de métrologie (53), de préférence optiques, qui sont configurés pour surveiller un profil z(x,y) de la forme de liquide (6) particulière, et/ou
- dans laquelle l'actionneur (7) exerce les forces d'actionnement (8) sur le liquide (5) par l'intermédiaire d'une membrane (18, 18a, 18b, 18c) formant une interface (11) avec le liquide (5).

12. Installation de fabrication (31) selon la revendication 10 ou 11,
l'installation (31) comprenant en outre
- un substrat d'actionnement (33) portant au moins un premier élément d'actionnement (19),
- en particulier une multitude de premiers éléments d'actionnement (19),
pour déformer une membrane (10) configurée pour former une interface (11) avec le liquide (5) pendant la solidification du liquide (5),
- et de préférence un substrat porteur (24) portant au moins un second élément d'actionnement (20) correspondant,
- en particulier une multitude de seconds éléments d'actionnement (20),
pour interagir avec l'au moins un premier élément d'actionnement (19) et pour déformer la membrane (10),
- en particulier de telle sorte que l'au moins un premier élément d'actionnement (19) et l'au moins un second élément d'actionnement (20) forment l'actionneur (7) pour déformer le liquide (5) en une forme de liquide (6) définissant une surface optique de forme libre (3) spécifique et/ou
- dans laquelle l'électronique de commande (35) est configurée pour piloter lesdits premier et second éléments d'actionnement (19, 20)/ledit actionneur (7).

13. Installation de fabrication (31) selon l'une quelconque des revendications 10 à 12, dans laquelle les moyens d'actionnement (32) comprennent au moins un actionneur (7) configuré pour accorder une membrane d'actionnement (18) séparée,
- en particulier, dans laquelle la membrane d'actionnement (18) séparée est configurée pour être en contact avec le liquide (5) pendant la solidification du liquide (5) pour définir les diverses formes de liquide (6) et les surfaces optiques de forme libre (3) résultantes, et/ou
- dans laquelle l'électronique de commande (35) est configurée pour accorder ladite membrane d'actionnement séparée (18) en divers profils Q(x,y).

14. Utilisation d'un actionneur (7)
- pour accorder une forme de liquide (6) d'un liquide pouvant être solidifié (5) qui forme une couche optique (9) d'un composant optique (1) à fabriquer avec l'actionneur (7) et qui, après solidification, définit une surface optique de forme libre non accordable (3) qui introduit un déphasage optique ϕ(ρ,θ) (4) constant, comprenant le fait que,
- l'actionneur (7) est reconfigurable et est accordé pour définir diverses surfaces optiques de forme libre différentes formées par le liquide pouvant être solidifié (5) déjà déposé sur une surface porteuse (23), et
- l'actionneur (7) présente de multiples éléments d'actionnement (12) qui sont pilotés individuellement pour déformer la forme de liquide (6) localement et qui sont chacun conçus pour exercer une force d'actionnement locale (8) sur le liquide (5) au sein d'une ouverture optique (30) du composant optique (1) qui est pertinente pour le déphasage optique ϕ(ρ,θ) (4) souhaité,
- dans laquelle les éléments d'actionnement (12, 20, 40) recouvrent une zone optique du composant optique (1) définissant ladite ouverture optique (30) et les forces d'actionnement locales exercées par l'actionneur (7) sont ainsi réparties sur ladite zone optique ;
- de préférence, dans laquelle l'actionneur (7) exerce les forces d'actionnement (8) sur le liquide (5) par l'intermédiaire d'une membrane (10, 18, 18a, 18b, 18c) formant une interface (11) avec le liquide (5).

15. Utilisation d'un actionneur (7) selon la revendication précédente,
- dans laquelle
- au moins une partie de l'actionneur (7), par exemple des seconds éléments d'actionnement (20) de l'actionneur (7), ou
- l'actionneur (7) complet
forme une partie du composant (1) complété et/ou
- dans laquelle l'actionneur (7) comprend un liquide passif (28) qui permet l'actionnement symétrique d'une membrane d'actionnement (18) séparée,
- de préférence en employant au moins un élément d'actionnement de compensation (23), agencé à l'extérieur d'une zone d'accord (21) de la membrane d'actionnement (18) utilisée pour définir la surface optique de forme libre (3),
- plus préférentiellement en utilisant une multitude d'éléments d'actionnement de compensation (23) répartis dans une zone périphérique (22) qui entoure ladite zone d'accord (21).
